# EUROPEAN PATENT SPECIFICATION

(11) **EP 4 611 435 B1**
(45) Date of publication and mention of the grant of the patent: **17.06.2026**
(21) Application number: 22964858.9
(22) Date of filing: 11.11.2022
(51) Int. Cl.: H04W 40/12, H04W 4/06, H04W 28/02, H04W 72/121, H04W 84/12

(54) **COMMUNICATION METHOD AND CHIP**
KOMMUNIKATIONSVERFAHREN UND CHIP
PROCÉDÉ DE COMMUNICATION ET PUCE

(43) Date of publication of application: 03.09.2025
(73) Proprietor: Huawei Technologies Co., Ltd., Shenzhen, Guangdong 518129 (CN)
(72) Inventor: WU, Weimin, Wuhan, Hubei 430074 (CN); GUO, Xiaodong, Shenzhen, Guangdong 518129 (CN); ZHANG, Haibo, Shenzhen, Guangdong 518129 (CN); ZHANG, Li, Shenzhen, Guangdong 518129 (CN); MENG, Meng, Shenzhen, Guangdong 518129 (CN); GUO, Kang, Wuhan, Hubei 430074 (CN)
(74) Representative: Grünecker Patent- und Rechtsanwälte PartG mbB
(86) International application number: PCT/CN2022/131436
(87) International publication number: WO 2024/098390

(56) References cited:
- WO-A1-2022/006852
- WO-A1-2022/198613
- CN-A- 106 793 138
- JP-A- 2011 253 432
- US-A1- 2018 146 423
- US-A1- 2020 323 024

## Description

### TECHNICAL FIELD

Embodiments of the present disclosure relate to the field of communication technologies, and more specifically, to a communication method.

### BACKGROUND

With popularity of intelligent terminals such as smartphones, social sharing requirements are increasing. However, currently, social sharing based on a wireless fidelity (Wi-Fi) technology is limited to some extent. For example, an available bandwidth of existing Wi-Fi multicast is low (for example, an enterprise-level bandwidth is only 6 Mbps by default), and transmission performance is poor. US 2018/146423 A1 relates to a network and method for multicast transmissions over shared wireless media in order to achieve reliability, multicast reate control, better spectrum efficiency and battery power conservation. US 2020/0323024 A1 relates to the field of communication technologies, in particular to a communication method and a related product.

Therefore, how to improve transmission performance of the Wi-Fi multicast becomes an urgent problem to be resolved.

### SUMMARY

The present disclosure provides a communication method, to improve transmission performance of Wi-Fi multicast. The present invention is defined according to the independent claims. The dependent claims recite advantageous embodiments of the invention.

According to a first aspect, a communication method is provided. The method may be performed by an access point (AP), or may be performed by a component (for example, a chip or a circuit) of the AP. This is not limited herein. For ease of description, the following provides descriptions by using an example in which the method is performed by the AP.

The communication method includes: A first access point AP obtains communication quality of a plurality of devices connected to the first AP. The first AP groups the plurality of devices into at least two device groups based on the communication quality of the plurality of devices. Communication quality of a device in a first device group in the at least two device groups is better than communication quality of a device in a second device group. The first AP sends data to the device in the first device group and the device in the second device group at a first rate. The first rate is determined based on a threshold of the first device group and a threshold of the second device group. The threshold of the first device group is different from the threshold of the second device group, the threshold of the first device group is determined based on the communication quality of the device in the first device group, the threshold of the second device group is determined based on the communication quality of the device in the second device group, and the data is sent in a multicast manner.

Based on the foregoing technical solution, the AP may group the plurality of connected devices into the at least two device groups based on the communication quality of the devices, and set different thresholds for different device groups. In addition, the used first rate is determined based on the thresholds of the different device groups. This helps improve multicast performance, and avoids that a rate is set based on a device with worst quality in a system and consequently, transmission of a device with high quality is affected.

For example, a Wi-Fi group managed by the first AP includes a total of 10 devices. Five devices have high quality, and the other five devices have poor quality. The first AP may group the 10 devices into two groups. If a threshold of a device group is a packet loss rate threshold, when the packet loss rate threshold is set, a packet loss rate threshold of a device group with high quality may be set to a smaller value, because the device group with high quality has a low packet loss probability.

With reference to the first aspect, in some implementations of the first aspect, before the first AP groups the plurality of devices into the at least two device groups based on the communication quality of the plurality of devices, the method further includes: The first AP determines that the plurality of devices are capable of being grouped into the at least two device groups.

With reference to the first aspect, in some implementations of the first aspect, that the first AP determines that the plurality of devices are capable of being grouped into the at least two device groups includes: The first AP determines, based on a preconfigured rule, that the plurality of devices are capable of being grouped into the at least two device groups. Alternatively, the first AP receives authorization information from each of the plurality of devices. The authorization information indicates that grouping into the at least two device groups is supported.

With reference to the first aspect, in some implementations of the first aspect, when the communication quality of the device in the second device group meets a first preset condition, the method further includes: The first AP sends rejection information to the device in the second device group. The rejection information indicates that access is rejected.

Based on the foregoing technical solution, a device with very poor communication quality (for example, the communication quality meets the first preset condition, and the first preset condition may be a predefined or negotiated threshold of a parameter that indicates the communication quality) may notify that access is rejected, to improve user experience.

With reference to the first aspect, in some implementations of the first aspect, that a first AP obtains communication quality of a plurality of devices connected to the first AP includes: The first AP obtains respective distances between the plurality of devices and the first AP, and determines the communication quality of the devices based on the distances between the devices and the first AP; or the first AP obtains packet loss rates of the plurality of devices, and determines the communication quality of the devices based on the packet loss rates of the devices; or the first AP obtains signal strength of the plurality of devices, and determines the communication quality of the devices based on the signal strength of the devices; or the first AP obtains signal-to-noise-plus-interference ratios of the plurality of devices, and determines the communication quality of the devices based on the signal-to-noise-plus-interference ratios of the devices; or the first AP obtains transmission delays of the plurality of devices, and determines the communication quality of the devices based on synchronization delays of the devices; or the first AP obtains image display quality of the plurality of devices, and determines the communication quality of the devices based on the image display quality of the devices; or the first AP obtains video playing fluency of the plurality of devices, and determines the communication quality of the devices based on the video playing fluency of the devices.

Based on the foregoing technical solution, the AP may determine communication quality of a connected device in different manners, to improve flexibility of the solution.

With reference to the first aspect, in some implementations of the first aspect, the threshold of the first device group is a first packet loss rate threshold, and the threshold of the second device group is a second packet loss rate threshold; or the threshold of the first device group is a first redundancy threshold, and the threshold of the second device group is a second redundancy threshold; or the threshold of the first device group is a first transmission delay threshold, and the threshold of the second device group is a second transmission delay threshold.

Based on the foregoing technical solution, the AP may set different thresholds, to improve flexibility of the solution.

With reference to the first aspect, in some implementations of the first aspect, when the threshold of the first device group is the first packet loss rate threshold, and the threshold of the second device group is the second packet loss rate threshold, the first rate meets the following condition: packet loss rates of all devices in the first device group are less than or equal to the first packet loss rate threshold, and packet loss rates of all devices in the second device group are less than or equal to the second packet loss rate threshold; or when the threshold of the first device group is the first redundancy threshold, and the threshold of the second device group is the second redundancy threshold, the first rate meets the following condition: redundancy of all devices in the first device group is greater than or equal to the first redundancy threshold, and redundancy of all devices in the second device group is greater than or equal to the second redundancy threshold; or when the threshold of the first device group is the first transmission delay threshold, and the threshold of the second device group is the second transmission delay threshold, the first rate meets the following condition: transmission delays of all devices in the first device group are less than or equal to the first transmission delay threshold, and transmission delays of all devices in the second device group are less than or equal to the second transmission delay threshold.

With reference to the first aspect, in some implementations of the first aspect, the method further includes: The first AP encodes to-be-sent data in a preset encoding manner, to obtain at least one code block. The first AP sends a redundant code block in the at least one code block to the device in the first device group and the device in the second device group at a second rate. That the first AP sends data to the device in the first device group and the device in the second device group at a first rate includes: The first AP sends a signal code block in the at least one code block to the device in the first device group and the device in the second device group at the first rate. The second rate is different from the first rate.

With reference to the first aspect, in some implementations of the first aspect, the method further includes: The first AP broadcasts the at least one code block to the devices connected to the first AP. The first AP receives a feedback frame from a first device. The feedback frame is used to request to retransmit a first code block. The first code block is one of the at least one code block, and the first device is one of the devices connected to the first AP. The first AP sends the first code block to the first device.

Based on the foregoing technical solution, the AP may send the code block in a multicast manner, and the device connected to the AP may unicast feedback when requesting retransmission, so that the AP may unicast retransmission, to save resources.

With reference to the first aspect, in some implementations of the first aspect, the preset encoding manner includes a fountain encoding manner.

Based on the foregoing technical solution, encoding may be performed based on fountain encoding. This is simple and easy to implement, and complexity is low.

With reference to the first aspect, in some implementations of the first aspect, the method further includes: The first AP receives updated communication quality from a device connected to the first AP; and the first AP redetermines, based on the updated communication quality, the device included in the first device group and the device included in the second device group.

Based on the foregoing technical solution, the AP may perform regrouping based on updated information, and dynamically pay attention to the communication quality of the connected device, to avoid improper grouping.

With reference to the first aspect, in some implementations of the first aspect, the method further includes: The first AP receives first information from a first station STA. The first information includes information about at least one second AP respectively corresponding to at least one beacon frame received by the first STA, and received signal strength indicator RSSI information of the at least one beacon frame. The first AP determines, based on the first information, a second AP that establishes a connection to the first STA. The second AP is one of the at least one second AP. The first AP sends first indication information to the first STA. The first indication information indicates the first STA to establish a connection to the second AP. The first STA and the second AP are two of the plurality of devices.

Based on the foregoing technical solution, hierarchical networking (for example, the first AP is directly connected to the second AP, and the second AP is directly connected to the first STA) may be established, to implement hierarchical transmission and end-to-end direct networking, and increase a networking scale.

With reference to the first aspect, in some implementations of the first aspect, the first STA belongs to a second group of devices, and the at least one second AP belongs to a first group of devices.

With reference to the first aspect, in some implementations of the first aspect, the first AP corresponds to a first frequency band, and the second AP corresponds to a second frequency band.

Based on the foregoing technical solution, different frequency bands may be used for different APs in hierarchical networking, to implement multi-frequency band communication.

With reference to the first aspect, in some implementations of the first aspect, after the first AP sends the data to the device in the first device group and the device in the second device group at a first rate, the method further includes: The first AP obtains updated communication quality of at least one device in the plurality of devices; and the first AP adjusts the first rate and/or redundancy of the to-be-sent data based on the updated communication quality of the at least one device.

Based on the foregoing technical solution, the AP may adjust a transmission rate based on the communication quality of the connected device, to improve a multicast rate and reliability, and reduce a transmission delay.

With reference to the first aspect, in some implementations of the first aspect, the at least one device is a device whose communication quality meets a second preset condition in the plurality of devices.

Based on the foregoing technical solution, a device with poor signal quality in the plurality of devices connected to the AP may feed back information, to reduce feedback overheads.

With reference to the first aspect, in some implementations of the first aspect, that the first AP obtains communication quality of at least one device in the plurality of devices includes: The first AP sends a detection signal to the at least one device. The detection signal is used to detect the communication quality of the at least one device. The first AP receives second indication information from the at least one device. The second indication information indicates the communication quality of the device.

With reference to the first aspect, in some implementations of the first aspect, the second indication information includes at least one of the following: a signal-to-noise-plus-interference ratio SINR, an air interface packet loss rate, signal strength, or a decoding packet loss rate.

With reference to the first aspect, in some implementations of the first aspect, the method further includes: The first AP sends a multicast parameter to a second device. The multicast parameter includes a virtual multicast source address, and the virtual multicast source address indicates a source address of a virtual multicast link established by the second device. The second device is one of the plurality of devices, and all of the plurality of devices transmit uplink data through the virtual multicast link.

Based on the foregoing technical solution, in a multicast establishment process, a multicast source may send a virtual multicast source address to a device that joins multicast, so that the device that joins multicast establishes a virtual multicast link, and may feed back uplink data to a server through the virtual multicast link. A unicast link does not need to be established for each device that joins multicast. This breaks a chip resource capability bottleneck, and reduces overheads.

With reference to the first aspect, in some implementations of the first aspect, the method further includes: The first AP receives uplink data sent by the second device through the virtual multicast link. A source address of a message carrying the uplink data is the virtual multicast source address, and the uplink data includes a medium access control layer MAC address of the second device.

With reference to the first aspect, in some implementations of the first aspect, the first AP sends the multicast parameter in a first communication manner. The first communication manner is different from a manner in which the first AP sends the data.

Based on the foregoing technical solution, the multicast parameter may be sent through cooperation in another communication manner.

According to a second aspect, a communication method is provided. The method may be performed by an access point (AP), or may be performed by a component (for example, a chip or a circuit) of the AP. This is not limited herein. For ease of description, the following provides descriptions by using an example in which the method is performed by the AP.

The communication method includes: A first access point AP receives first information from a first station STA. The first information includes information about at least one second AP respectively corresponding to at least one beacon frame received by the first STA, and received signal strength indicator RSSI information of the at least one beacon frame. The first AP determines, based on the first information, a second AP that establishes a connection to the first STA. The second AP is one of the at least one second AP. The first AP sends first indication information to the first STA. The first indication information indicates the first STA to establish a connection to the second AP. The first AP is a device that sends multicast data, and the at least one second AP and the first STA are devices connected to the first AP.

Based on the foregoing technical solution, hierarchical networking (for example, the first AP is directly connected to the second AP, and the second AP is directly connected to the first STA) may be established, to implement hierarchical transmission and end-to-end direct networking, and increase a networking scale.

With reference to the second aspect, in some implementations of the second aspect, the first AP corresponds to a first frequency band, and the second AP corresponds to a second frequency band.

Based on the foregoing technical solution, different frequency bands may be used for different APs in hierarchical networking, to implement multi-frequency band communication.

With reference to the second aspect, in some implementations of the second aspect, the method further includes: The first AP obtains communication quality of a plurality of devices connected to the first AP. The first AP groups the plurality of devices into at least two device groups based on the communication quality of the plurality of devices. Communication quality of a device in a first device group in the at least two device groups is better than communication quality of a device in a second device group. The first AP sends data to the device in the first device group and the device in the second device group at a first rate. The first rate is determined based on a threshold of the first device group and a threshold of the second device group. The threshold of the first device group is different from the threshold of the second device group, the threshold of the first device group is determined based on the communication quality of the device in the first device group, the threshold of the second device group is determined based on the communication quality of the device in the second device group, and the data is sent in a multicast manner.

Based on the foregoing technical solution, the AP may group the plurality of connected devices into the at least two device groups based on the communication quality of the devices, and set different thresholds for different device groups. In addition, the used first rate is determined based on the thresholds of the different device groups. This helps improve multicast performance, and avoids that a rate is set based on a device with worst quality in a system and consequently, transmission of a device with high quality is affected.

With reference to the second aspect, in some implementations of the second aspect, the first STA belongs to the second group of devices, and the at least one second AP belongs to the first group of devices.

With reference to the second aspect, in some implementations of the second aspect, before the first AP groups the plurality of devices into the at least two device groups based on the communication quality of the plurality of devices, the method further includes: The first AP determines that the plurality of devices are capable of being grouped into the at least two device groups.

With reference to the second aspect, in some implementations of the second aspect, that the first AP determines that the plurality of devices are capable of being grouped into the at least two device groups includes: The first AP determines, based on a preconfigured rule, that the plurality of devices are capable of being grouped into the at least two device groups. Alternatively, the first AP receives authorization information from each of the plurality of devices. The authorization information indicates that grouping into the at least two device groups is supported.

With reference to the second aspect, in some implementations of the second aspect, when the communication quality of the device in the second device group meets a first preset condition, the method further includes: The first AP sends rejection information to the device in the second device group. The rejection information indicates that access is rejected.

Based on the foregoing technical solution, a device with very poor communication quality may notify that access is rejected, to improve user experience.

With reference to the second aspect, in some implementations of the second aspect, that a first AP obtains communication quality of a plurality of devices connected to the first AP includes: The first AP obtains respective distances between the plurality of devices and the first AP, and determines the communication quality of the devices based on the distances between the devices and the first AP; or the first AP obtains packet loss rates of the plurality of devices, and determines the communication quality of the devices based on the packet loss rates of the devices; or the first AP obtains signal strength of the plurality of devices, and determines the communication quality of the devices based on the signal strength of the devices; or the first AP obtains signal-to-noise-plus-interference ratios of the plurality of devices, and determines the communication quality of the devices based on the signal-to-noise-plus-interference ratios of the devices; or the first AP obtains transmission delays of the plurality of devices, and determines the communication quality of the devices based on synchronization delays of the devices; or the first AP obtains image display quality of the plurality of devices, and determines the communication quality of the devices based on the image display quality of the devices; or the first AP obtains video playing fluency of the plurality of devices, and determines the communication quality of the devices based on the video playing fluency of the devices.

Based on the foregoing technical solution, the AP may determine communication quality of a connected device in different manners, to improve flexibility of the solution.

With reference to the second aspect, in some implementations of the second aspect, the threshold of the first device group is a first packet loss rate threshold, and the threshold of the second device group is a second packet loss rate threshold; or the threshold of the first device group is a first redundancy threshold, and the threshold of the second device group is a second redundancy threshold; or the threshold of the first device group is a first transmission delay threshold, and the threshold of the second device group is a second transmission delay threshold.

Based on the foregoing technical solution, the AP may set different thresholds, to improve flexibility of the solution.

With reference to the second aspect, in some implementations of the second aspect, when the threshold of the first device group is the first packet loss rate threshold, and the threshold of the second device group is the second packet loss rate threshold, the first rate meets the following condition: packet loss rates of all devices in the first device group are less than or equal to the first packet loss rate threshold, and packet loss rates of all devices in the second device group are less than or equal to the second packet loss rate threshold; or when the threshold of the first device group is the first redundancy threshold, and the threshold of the second device group is the second redundancy threshold, the first rate meets the following condition: redundancy of all devices in the first device group is greater than or equal to the first redundancy threshold, and redundancy of all devices in the second device group is greater than or equal to the second redundancy threshold; or when the threshold of the first device group is the first transmission delay threshold, and the threshold of the second device group is the second transmission delay threshold, the first rate meets the following condition: transmission delays of all devices in the first device group are less than or equal to the first transmission delay threshold, and transmission delays of all devices in the second device group are less than or equal to the second transmission delay threshold.

With reference to the second aspect, in some implementations of the second aspect, the method further includes: The first AP encodes to-be-sent data in a preset encoding manner, to obtain at least one code block. The first AP sends a redundant code block in the at least one code block to the device in the first device group and the device in the second device group at a second rate. That the first AP sends data to the device in the first device group and the device in the second device group at a first rate includes: The first AP sends a signal code block in the at least one code block to the device in the first device group and the device in the second device group at the first rate. The second rate is different from the first rate.

With reference to the second aspect, in some implementations of the second aspect, the method further includes: The first AP broadcasts the at least one code block to the devices connected to the first AP. The first AP receives a feedback frame from a first device. The feedback frame is used to request to retransmit a first code block. The first code block is one of the at least one code block, and the first device is one of the devices connected to the first AP. The first AP sends the first code block to the first device.

Based on the foregoing technical solution, the AP may send the code block in a multicast manner, and the device connected to the AP may unicast feedback when requesting retransmission, so that the AP may unicast retransmission, to save resources.

With reference to the second aspect, in some implementations of the second aspect, the preset encoding manner includes a fountain encoding manner.

Based on the foregoing technical solution, encoding may be performed based on fountain encoding. This is simple and easy to implement, and complexity is low.

With reference to the second aspect, in some implementations of the second aspect, the method further includes: The first AP receives updated communication quality from a device connected to the first AP; and the first AP redetermines, based on the updated communication quality, the device included in the first device group and the device included in the second device group.

Based on the foregoing technical solution, the AP may perform regrouping based on updated information, and dynamically pay attention to the communication quality of the connected device, to avoid improper grouping.

With reference to the second aspect, in some implementations of the second aspect, after the first AP sends the data to the device in the first device group and the device in the second device group at a first rate, the method further includes: The first AP obtains updated communication quality of at least one device in the plurality of devices; and the first AP adjusts the first rate and/or redundancy of the to-be-sent data based on the updated communication quality of the at least one device.

Based on the foregoing technical solution, the AP may adjust a transmission rate based on the feedback information of the connected device, to improve a multicast rate and reliability, and reduce a transmission delay.

With reference to the second aspect, in some implementations of the second aspect, the at least one device is a device whose communication quality meets a second preset condition in the plurality of devices.

Based on the foregoing technical solution, a device with poor signal quality in the plurality of devices connected to the AP may feed back information, to reduce feedback overheads.

With reference to the second aspect, in some implementations of the second aspect, that the first AP obtains communication quality of at least one device in the plurality of devices includes: The first AP sends a detection signal to the at least one device. The detection signal is used to detect the communication quality of the at least one device. The first AP receives second indication information from the at least one device. The second indication information indicates the communication quality of the device.

With reference to the second aspect, in some implementations of the second aspect, the second indication information includes at least one of the following: a signal-to-noise-plus-interference ratio SINR, an air interface packet loss rate, signal strength, or a decoding packet loss rate.

With reference to the second aspect, in some implementations of the second aspect, the method further includes: The first AP sends a multicast parameter to a second device. The multicast parameter includes a virtual multicast source address, and the virtual multicast source address indicates a source address of a virtual multicast link established by the second device. The second device is one of the plurality of devices, and all of the plurality of devices transmit uplink data through the virtual multicast link.

Based on the foregoing technical solution, in a multicast establishment process, a multicast source may send a virtual multicast source address to a device that joins multicast, so that the device that joins multicast establishes a virtual multicast link, and may feed back uplink data to a server through the virtual multicast link. A unicast link does not need to be established for each device that joins multicast. This breaks a chip resource capability bottleneck, and reduces overheads.

With reference to the second aspect, in some implementations of the second aspect, the method further includes: The first AP receives uplink data sent by the second device through the virtual multicast link. A source address of a message carrying the uplink data is the virtual multicast source address, and the uplink data includes a medium access control layer MAC address of the second device.

With reference to the second aspect, in some implementations of the second aspect, the first AP sends the multicast parameter in a first communication manner. The first communication manner is different from a manner in which the first AP sends the data.

Based on the foregoing technical solution, the multicast parameter may be sent through cooperation in another communication manner.

According to a third aspect, a communication method is provided. The method may be performed by an access point (AP), or may be performed by a component (for example, a chip or a circuit) of the AP. This is not limited herein. For ease of description, the following provides descriptions by using an example in which the method is performed by the AP.

The communication method includes: A first access point AP sends, at a first rate, data to a plurality of devices connected to the first AP. The first AP obtains updated communication quality of at least one device in the plurality of devices. The first AP adjusts the first rate and/or redundancy of to-be-sent data based on the updated communication quality of the at least one device.

Based on the foregoing technical solution, the AP may adjust a transmission rate based on the communication quality of the connected device, to improve a multicast rate and reliability, and reduce a transmission delay.

With reference to the third aspect, in some implementations of the third aspect, the at least one device is a device whose communication quality meets a second preset condition in the plurality of devices.

Based on the foregoing technical solution, a device with poor signal quality in the plurality of devices connected to the AP may feed back information, to reduce feedback overheads.

With reference to the third aspect, in some implementations of the third aspect, that the first AP obtains communication quality of at least one device in the plurality of devices includes: The first AP sends a detection signal to the at least one device. The detection signal is used to detect the communication quality of the at least one device. The first AP receives second indication information from the at least one device. The second indication information indicates the communication quality of the device.

With reference to the third aspect, in some implementations of the third aspect, the second indication information includes at least one of the following: a signal-to-noise-plus-interference ratio SINR, an air interface packet loss rate, signal strength, or a decoding packet loss rate.

With reference to the third aspect, in some implementations of the third aspect, the method further includes: The first AP sends a multicast parameter to a second device. The multicast parameter includes a virtual multicast source address, and the virtual multicast source address indicates a source address of a virtual multicast link established by the second device. The second device is one of the plurality of devices, and all of the plurality of devices transmit uplink data through the virtual multicast link.

Based on the foregoing technical solution, in a multicast establishment process, a multicast source may send a virtual multicast source address to a device that joins multicast, so that the device that joins multicast establishes a virtual multicast link, and may feed back uplink data to a server through the virtual multicast link. A unicast link does not need to be established for each device that joins multicast. This breaks a chip resource capability bottleneck, and reduces overheads.

With reference to the third aspect, in some implementations of the third aspect, the method further includes: The first AP receives uplink data sent by the second device through the virtual multicast link. A source address of a message carrying the uplink data is the virtual multicast source address, and the uplink data includes a medium access control layer MAC address of the second device.

With reference to the third aspect, in some implementations of the third aspect, the first AP sends the multicast parameter in a first communication manner. The first communication manner is different from a manner in which the first AP sends the data.

Based on the foregoing technical solution, the multicast parameter may be sent through cooperation in another communication manner.

With reference to the third aspect, in some implementations of the third aspect, the method further includes: The first AP obtains communication quality of a plurality of devices connected to the first AP. The first AP groups the plurality of devices into at least two device groups based on the communication quality of the plurality of devices. Communication quality of a device in a first device group in the at least two device groups is better than communication quality of a device in a second device group. The first AP sends data to the device in the first device group and the device in the second device group at a first rate. The first rate is determined based on a threshold of the first device group and a threshold of the second device group. The threshold of the first device group is different from the threshold of the second device group, the threshold of the first device group is determined based on the communication quality of the device in the first device group, the threshold of the second device group is determined based on the communication quality of the device in the second device group, and the data is sent in a multicast manner.

Based on the foregoing technical solution, the AP may group the plurality of connected devices into the at least two device groups based on the communication quality of the devices, and set different thresholds for different device groups. In addition, the used first rate is determined based on the thresholds of the different device groups. This helps improve multicast performance, and avoids that a rate is set based on a device with worst quality in a system and consequently, transmission of a device with high quality is affected.

For example, a Wi-Fi group managed by the first AP includes a total of 10 devices. Five devices have high quality, and the other five devices have poor quality. The first AP may group the 10 devices into two groups. If a threshold of a device group is a packet loss rate threshold, when the packet loss rate threshold is set, a packet loss rate threshold of a device group with high quality may be set to a smaller value, because the device group with high quality has a low low packet loss probability.

With reference to the third aspect, in some implementations of the third aspect, before the first AP groups the plurality of devices into the at least two device groups based on the communication quality of the plurality of devices, the method further includes: The first AP determines that the plurality of devices are capable of being grouped into the at least two device groups.

With reference to the third aspect, in some implementations of the third aspect, that the first AP determines that the plurality of devices are capable of being grouped into the at least two device groups includes: The first AP determines, based on a preconfigured rule, that the plurality of devices are capable of being grouped into the at least two device groups. Alternatively, the first AP receives authorization information from each of the plurality of devices. The authorization information indicates that grouping into the at least two device groups is supported.

With reference to the third aspect, in some implementations of the third aspect, when the communication quality of the device in the second device group meets a first preset condition, the method further includes: The first AP sends rejection information to the device in the second device group. The rejection information indicates that access is rejected.

Based on the foregoing technical solution, a device with very poor communication quality may notify that access is rejected, to improve user experience.

With reference to the third aspect, in some implementations of the third aspect, that a first AP obtains communication quality of a plurality of devices connected to the first AP includes: The first AP obtains respective distances between the plurality of devices and the first AP, and determines the communication quality of the devices based on the distances between the devices and the first AP; or the first AP obtains packet loss rates of the plurality of devices, and determines the communication quality of the devices based on the packet loss rates of the devices; or the first AP obtains signal strength of the plurality of devices, and determines the communication quality of the devices based on the signal strength of the devices; or the first AP obtains signal-to-noise-plus-interference ratios of the plurality of devices, and determines the communication quality of the devices based on the signal-to-noise-plus-interference ratios of the devices; or the first AP obtains transmission delays of the plurality of devices, and determines the communication quality of the devices based on synchronization delays of the devices; or the first AP obtains image display quality of the plurality of devices, and determines the communication quality of the devices based on the image display quality of the devices; or the first AP obtains video playing fluency of the plurality of devices, and determines the communication quality of the devices based on the video playing fluency of the devices.

Based on the foregoing technical solution, the AP may determine communication quality of a connected device in different manners, to improve flexibility of the solution.

With reference to the third aspect, in some implementations of the third aspect, the threshold of the first device group is a first packet loss rate threshold, and the threshold of the second device group is a second packet loss rate threshold; or the threshold of the first device group is a first redundancy threshold, and the threshold of the second device group is a second redundancy threshold; or the threshold of the first device group is a first transmission delay threshold, and the threshold of the second device group is a second transmission delay threshold.

Based on the foregoing technical solution, the AP may set different thresholds, to improve flexibility of the solution.

With reference to the third aspect, in some implementations of the third aspect, when the threshold of the first device group is the first packet loss rate threshold, and the threshold of the second device group is the second packet loss rate threshold, the first rate meets the following condition: packet loss rates of all devices in the first device group are less than or equal to the first packet loss rate threshold, and packet loss rates of all devices in the second device group are less than or equal to the second packet loss rate threshold; or when the threshold of the first device group is the first redundancy threshold, and the threshold of the second device group is the second redundancy threshold, the first rate meets the following condition: redundancy of all devices in the first device group is greater than or equal to the first redundancy threshold, and redundancy of all devices in the second device group is greater than or equal to the second redundancy threshold; or when the threshold of the first device group is the first transmission delay threshold, and the threshold of the second device group is the second transmission delay threshold, the first rate meets the following condition: transmission delays of all devices in the first device group are less than or equal to the first transmission delay threshold, and transmission delays of all devices in the second device group are less than or equal to the second transmission delay threshold.

With reference to the third aspect, in some implementations of the third aspect, the method further includes: The first AP encodes to-be-sent data in a preset encoding manner, to obtain at least one code block. The first AP sends a redundant code block in the at least one code block to the device in the first device group and the device in the second device group at a second rate. That the first AP sends data to the device in the first device group and the device in the second device group at a first rate includes: The first AP sends a signal code block in the at least one code block to the device in the first device group and the device in the second device group at the first rate. The second rate is different from the first rate.

With reference to the third aspect, in some implementations of the third aspect, the method further includes: The first AP broadcasts the at least one code block to the devices connected to the first AP. The first AP receives a feedback frame from a first device. The feedback frame is used to request to retransmit a first code block. The first code block is one of the at least one code block, and the first device is one of the devices connected to the first AP. The first AP sends the first code block to the first device.

Based on the foregoing technical solution, the AP may send the code block in a multicast manner, and the device connected to the AP may unicast feedback when requesting retransmission, so that the AP may unicast retransmission, to save resources.

With reference to the third aspect, in some implementations of the third aspect, the preset encoding manner includes a fountain encoding manner.

Based on the foregoing technical solution, encoding may be performed based on fountain encoding. This is simple and easy to implement, and complexity is low.

With reference to the third aspect, in some implementations of the third aspect, the method further includes: The first AP receives updated communication quality from a device connected to the first AP; and the first AP redetermines, based on the updated communication quality, the device included in the first device group and the device included in the second device group.

Based on the foregoing technical solution, the AP may perform regrouping based on updated information, and dynamically pay attention to the communication quality of the connected device, to avoid improper grouping.

With reference to the third aspect, in some implementations of the third aspect, the method further includes: The first AP receives first information from a first station STA. The first information includes information about at least one second AP respectively corresponding to at least one beacon frame received by the first STA, and received signal strength indicator RSSI information of the at least one beacon frame. The first AP determines, based on the first information, a second AP that establishes a connection to the first STA. The second AP is one of the at least one second AP. The first AP sends first indication information to the first STA. The first indication information indicates the first STA to establish a connection to the second AP. The first STA and the second AP are two of the plurality of devices.

Based on the foregoing technical solution, hierarchical networking (for example, the first AP is directly connected to the second AP, and the second AP is directly connected to the first STA) may be established, to implement hierarchical transmission and end-to-end direct networking, and increase a networking scale.

With reference to the third aspect, in some implementations of the third aspect, the first STA belongs to the second group of devices, and the at least one second AP belongs to the first group of devices.

With reference to the third aspect, in some implementations of the third aspect, the first AP corresponds to a first frequency band, and the second AP corresponds to a second frequency band.

Based on the foregoing technical solution, different frequency bands may be used for different APs in hierarchical networking, to implement multi-frequency band communication.

According to a fourth aspect, a communication apparatus is provided. The apparatus is configured to perform the methods according to the first aspect to the third aspect. Specifically, the communication apparatus may include units and/or modules, for example, a processing unit and a transceiver unit, configured to perform the method provided in the first aspect or the third aspect.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on the chip, a chip system, or a circuit; and the processing unit may be at least one processor, a processing circuit, a logic circuit, or the like.

According to a fifth aspect, the present disclosure provides a processor, configured to perform the method according to the foregoing aspects.

Unless otherwise specified, or if operations such as sending and measurement/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in the present disclosure.

According to a sixth aspect, a computer-readable storage medium is provided. The computer-readable storage medium stores program code executed by a device, and the program code is used to perform the methods provided in the foregoing aspects.

According to a seventh aspect, a computer program product including instructions is provided. When the computer program product runs on a computer, the computer is enabled to perform the methods provided in the foregoing aspects.

According to an eighth aspect, a chip is provided. The chip includes a processor and a communication interface, and the processor reads, through the communication interface, instructions stored in a memory, to perform the methods provided in the foregoing aspects.

Optionally, in an implementation, the chip further includes the memory. The memory stores a computer program or the instructions. The processor is configured to execute the computer program or the instructions stored in the memory. When the computer program or the instructions are executed, the processor is configured to perform the methods provided in the foregoing aspects.

According to a ninth aspect, a communication system is provided, including the communication apparatus according to the fifth aspect and a communication device connected to the communication apparatus.

### BRIEF DESCRIPTION OF DRAWINGS

FIG. 1 is a diagram of a communication system applicable to a method according to an embodiment of the present disclosure;
FIG. 2 is a schematic flowchart of a communication method according to the present disclosure;
FIG. 3 is a diagram of a packet loss rate threshold according to the present disclosure;
FIG. 4 is a diagram of a dual-rate sending example according to the present disclosure;
(a) and (b) in FIG. 5 are diagrams of setting a packet loss rate according to the present disclosure;
FIG. 6 is a schematic flowchart of another communication method according to the present disclosure;
FIG. 7 is a diagram of hierarchical networking according to the present disclosure;
FIG. 8 is a schematic flowchart of still another communication method according to the present disclosure;
FIG. 9 is a schematic flowchart of still another communication method according to the present disclosure;
FIG. 10 is a block diagram of a communication apparatus 10 according to an embodiment of the present disclosure;
FIG. 11 is a diagram of another communication apparatus 20 according to an embodiment of the present disclosure; and
FIG. 12 is a diagram of a chip system 30 according to an embodiment of the present disclosure.

### DESCRIPTION OF EMBODIMENTS

The following describes technical solutions of embodiments in the present disclosure with reference to accompanying drawings.

The technical solutions in embodiments of the present disclosure may be applied to various communication systems, for example, a wireless local area network (WLAN) communication system or a future communication system.

For example, the following describes an application scenario in embodiments of the present disclosure and a method in embodiments of the present disclosure by using a WLAN system as an example.

Specifically, embodiments of the present disclosure may be applied to a WLAN, and embodiments of the present disclosure may be applied to any protocol in IEEE 802.11 series protocols currently used in the WLAN. The WLAN system may include one or more access points (AP) and stations (STA). The STA may also be referred to as a non-access point station (non-AP STA).

It should be understood that, in embodiments of the present disclosure, a user station may also be referred to a subscriber unit, an access terminal, a mobile station, a remote station, a remote terminal, a mobile device, a user terminal, a terminal, a wireless communication device, a user agent, a user apparatus, or user equipment (UE). The STA may be a cellular phone, a cordless phone, a session initiation protocol (SIP) phone, a wireless local loop (WLL) station, a personal digital assistant (PDA), a handheld device having a wireless local area network (for example, Wi-Fi) communication function, a wearable device, a computing device, or another processing device connected to a wireless modem.

In addition, the AP in embodiments of the present disclosure may be configured to: communicate with the access terminal through the wireless local area network, and transmit data from the access terminal to a network side, or transmit data from a network side to the access terminal.

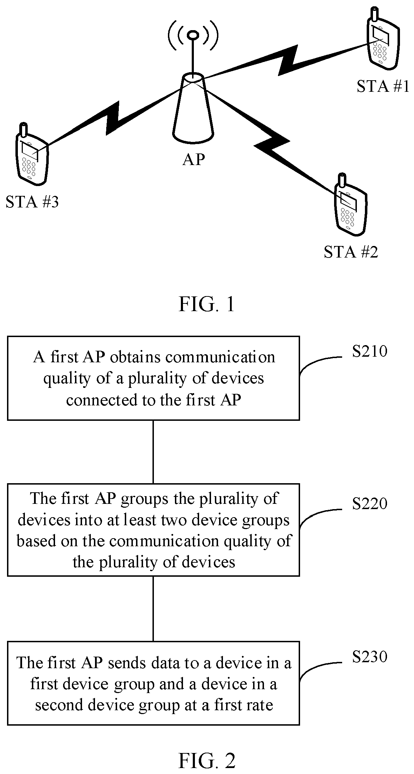

For ease of understanding embodiments of the present disclosure, a communication system shown in FIG. 1 is first used as an example to describe in detail a communication system applicable to embodiments of the present disclosure. A scenario system shown in FIG. 1 may be a WLAN system. The WLAN system in FIG. 1 may include one or more APs and one or more STAs. In FIG. 1, communication between one AP (an AP shown in FIG. 1) and three STAs (a STA #1, a STA #2, and a STA #3 shown in FIG. 1) is used as an example.

Wireless communication may be performed between the AP and the STA in various manners. For example, an uplink transmission manner between the AP and the STA includes but is not limited to an orthogonal frequency division multiple access (OFDMA) manner, a multi-user channel multiple-input multiple-output (MU-MIMO) manner, an OFDMA and MU-MIMO hybrid transmission manner, or a single-user multiple-input multiple-output (SU-MIMO) technology.

The AP is also referred to as a wireless access point, a hotspot, or the like. The AP is an access point for a mobile user to access a wired network, and is mainly deployed in a home, a building, and a campus, or is deployed outdoors. The AP is equivalent to a bridge that connects a wired network and a wireless network, and a main function of the AP is to connect wireless network clients together, and then connect the wireless network to the Ethernet. Specifically, the AP may be a terminal device or a network device with a wireless fidelity (Wi-Fi) chip. Optionally, the AP may be a device that supports a plurality of WLAN standards such as 802.11.

The AP may be a multi-antenna AP or may be a single-antenna AP. The AP includes a physical layer (PHY) processing circuit and a medium access control (MAC) processing circuit. The physical layer processing circuit may be configured to process a physical layer signal, and the MAC layer processing circuit may be configured to process a MAC layer signal.

The STA may be a terminal product that supports 802.11 series standards, for example, a mobile phone or a notebook computer. In an actual scenario, the STA may also be a device with a plurality of antennas, and may be a device with more than two antennas. The STA may include a PHY processing circuit and a MAC processing circuit. The physical layer processing circuit may be configured to process a physical layer signal, and the MAC layer processing circuit may be configured to process a MAC layer signal.

It should be noted that, for internal structures of the AP and the STA, refer to descriptions of the conventional technology, or refer to internal structures of the AP and the STA after future technology development. The internal structures of the AP and the STA are not limited in the present disclosure, and details are not described again.

For ease of understanding of embodiments of the present disclosure, several basic concepts in embodiments of the present disclosure are briefly described. It should be understood that basic concepts described below are briefly described by using a basic concept specified in a WLAN protocol as an example, but embodiments of the present disclosure are not limited to being applied only to a WLAN system. Therefore, standard names appearing when the WLAN system is used as an example for description are all functional descriptions, and specific names are not limited, indicate only functions of a device, and may be correspondingly extended to another system, for example, an NR system or a future communication system.
1. Soft AP: The soft AP in the present disclosure may be a terminal product that supports 802.11 series standards, for example, a mobile phone or a notebook computer. For example, a function of being connected to a wireless network client is implemented by using a central processing unit (CPU). Compared with a hard AP (that is, a function of being connected to the wireless network client is implemented by using a hardware facility), the soft AP focuses more on resource consumption.
   It should be understood that the AP in embodiments of the present disclosure includes but is not limited to the soft AP.
2. Digital fountain code: In embodiments of the present disclosure, a device that receives multicast data may perform decoding by using the fountain code. The fountain code in the present disclosure is first briefly described.
   A transmit end may generate any quantity of encoded groups based on k original groups. Provided that a receive end receives any (1+ε)k encoded groups, all the original groups can be successfully restored at a high probability. A well-designed digital fountain code not only has very small decoding overheads ε, but also has a simple encoding/decoding method and small encoding/decoding complexity.
3. Wi-Fi multicast: In a Wi-Fi standard promotion process, a unicast capability of Wi-Fi 6 evolves to 10 Gbit/s. A multicast standard is outdated (for example, 802.11aa 2012 version) and is in a serious stagnated state. In Wi-Fi 7, there is no expansion plan for Wi-Fi multicast currently, high-speed transmission is not supported, transmission is unreliable, and there is no acknowledgment retransmission mechanism, a conflict acknowledgment mechanism, or the like.
   In addition, Wi-Fi multicast is mainly used to transmit a management packet (for example, a beacon frame). An enterprise product supports a theoretical maximum capability of 55 Mbps, is only 6 Mbps by default, and is vulnerable to interference. A consumer product (for example, a home AP) does not support multicast, and is all multicast-to-unicast conversion by default. The multicast-to-unicast conversion may be understood as that the home AP sequentially sends multicast data to a plurality of receive end devices in a unicast manner.
4. Wi-Fi multi-frequency: In Wi-Fi 7, a multi-link operation (MLO) standard is being formulated, so that devices can simultaneously perform sending and receiving across different frequency bands and channels. A receive end device in embodiments of the present disclosure may also operate on different frequency bands. How to enable the device to operate on different frequency bands is not limited in the present disclosure.
5. Active retransmission: Currently, a concept of the active retransmission is proposed in a Wi-Fi multicast protocol, to ensure reliability of data transmission. Specifically, the active retransmission includes: all frames are retransmitted R times by default.
   However, the active retransmission manner is only at a protocol level, and is not actually supported by an AP. In addition, transmission reliability is ensured in the active retransmission manner. A bandwidth is wasted when a network condition is good; and 100% reliability cannot be ensured when a network condition.
6. Block acknowledgment: Currently, a concept of the block acknowledgment is also proposed in a Wi-Fi multicast protocol, to ensure reliability of data transmission. Specifically, the block acknowledgment includes: After sending all data of a window in a broadcast manner, a source end queries a receiving status of each receive end in a unicast polling manner. The receive end returns a a sequence number list of a receive end that successfully performs receiving. The source end unicasts, to the corresponding receive end in a unicast manner, a frame that is unsuccessfully sent.

However, the block acknowledgment manner is also only at a protocol level, and is not actually supported by an AP. In addition, transmission reliability is ensured in the block acknowledgment manner, and each polling causes high overheads to multicast performance.

In addition, to facilitate understanding of embodiments of the present disclosure, the following several descriptions are provided.

First, in the present disclosure, "indicating" may include "directly indicating" and "indirectly indicating". When a piece of indication information is described as indicating A, the indication information may directly indicate A or indirectly indicate A, but it does not necessarily mean that the indication information necessarily includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in the present disclosure.

Second, "at least one" shown in the present disclosure means one or more, and "a plurality of" means two or more. In addition, in embodiments of the present disclosure, "first", "second", and various numbers (for example, "#1" and "#2") are merely used for differentiation for ease of description, and are not used to limit the scope of embodiments of the present disclosure. The sequence numbers in the following processes do not mean execution sequences. The execution sequences of the processes should be determined based on functions and internal logic of the processes, and should not constitute any limitation on implementation processes of embodiments of the present disclosure. It should be understood that, objects described in this way may be interchangeable in proper cases, so that solutions other than embodiments of the present disclosure can be described. In addition, in embodiments of the present disclosure, words such as "210" and "220" are merely identifiers for ease of description, and do not limit a sequence of performing steps.

Third, in the present disclosure, the word "example" or "for example" is used to represent giving an example, an illustration, or a description. Any embodiment or design scheme described as an "example" or "for example" in the present disclosure should not be explained as being more preferred or having more advantages than another embodiment or design scheme. To be precise, use of the word such as "example" or "for example" is intended to present a relative concept in a specific manner.

Fourth, "store" in embodiments of the present disclosure may mean "stored in one or more memories". The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in the present disclosure.

Fifth, the term "and/or" in this specification describes only an association relationship for describing associated objects, and indicates that three relationships may exist. For example, A and/or B may indicate the following three cases: Only A exists, both A and B exist, and only B exists. In addition, the character "/" in this specification usually indicates an "or" relationship between the associated objects.

With reference to FIG. 1, the foregoing briefly describes a scenario to which a communication method provided in embodiments of the present disclosure can be applied, and describes basic concepts that may be used in embodiments of the present disclosure.

It can be learned from the description of the foregoing basic concepts that, for Wi-Fi multicast, protocol development is stagnated currently, and a related reliable transmission solution promoted in the protocol is not used in an actual product, and there are some certainties. The present disclosure provides a communication method, to improve performance of Wi-Fi multicast, for example, improve an operating bandwidth, transmission reliability, and the like of Wi-Fi multicast.

It should be understood that the communication method provided in embodiments of the present disclosure may be applied to a WLAN communication system, for example, a communication system 100 shown in FIG. 1.

It should be further understood that a specific structure of an execution body of the communication method provided in embodiments of the present disclosure is not specifically limited in the following embodiments, provided that communication can be performed in the method provided in embodiments of the present disclosure by running a program that records code of the method provided in embodiments of the present disclosure. For example, the method provided in this embodiment of the present disclosure may be performed by a first AP, a second AP, and a STA, or may be a functional module that can invoke a program and execute the program and that is in the first AP, the second AP, and the STA.

The following describes in detail the communication method provided in embodiments of the present disclosure by using interaction between the first AP, the second AP, and the STA as an example.

FIG. 2 is a schematic flowchart of a communication method according to the present disclosure. The following step is included.

S210: A first AP obtains communication quality of a plurality of devices connected to the first AP.

In a possible implementation, the device connected to the first AP actively reports current communication quality to the first AP.

For example, the device connected to the first AP periodically reports the current communication quality to the first AP.

For another example, after receiving multicast information sent by the first AP, the device connected to the first AP reports the current communication quality to the first AP. For example, the first AP sends, to the device connected to the first AP, multicast information used to request to feed back communication quality.

In another possible implementation, the first AP may obtain, from another device (for example, a management device), communication quality of the device connected to the first AP.

In still another possible implementation, the first AP may determine, in another manner (for example, a predefined manner), the communication quality of the device connected to the first AP.

It should be understood that the foregoing several possible implementations are merely examples for describing a manner in which the first AP obtains the communication quality of the device connected to the first AP, and do not constitute any limitation on the protection scope of the present disclosure. The first AP may alternatively obtain, in another manner, the communication quality of the device connected to the first AP. Examples are not described one by one herein again.

For example, the devices connected to the first AP include a device #1, a device #2, and a device #3. The device #1, the device #2, and the device #3 respectively send information #1, information #2, and information #3 to the first AP. The information #1 indicates communication quality of the device #1, the information #2 indicates communication quality of the device #2, and the information #3 indicates communication quality of the device #3.

For example, the first AP is an AP that sends multicast data, and the devices connected to the first AP include but are not limited to a STA or an AP.

For example, there are the following several possible manners in which the first AP obtains the communication quality of the plurality of devices connected to the first AP.

Manner 1: The first AP obtains respective distances between the plurality of devices and the first AP, and determines the communication quality of the devices based on the distances between the devices and the first AP.

For example, the device connected to the first AP periodically feeds back information about a distance between the device and the first AP. A device with a short distance (for example, the distance is less than or equal to a threshold #1, and the threshold #1 is predefined or determined through negotiation, which is not limited in this embodiment) to the first AP is a device with good communication quality, and a device with a long distance (for example, the distance is greater than the threshold #1) to the first AP is a device with poor communication quality. For another example, a plurality of thresholds may be set, and communication quality of different devices is determined by comparing a distance with different thresholds.

Manner 2: The first AP obtains packet loss rates of the plurality of devices, and determines the communication quality of the devices based on the packet loss rates of the devices. For video transmission, the packet loss rate may also be understood as a frame loss rate.

For example, the device connected to the first AP periodically feeds back packet loss rate information of a channel #1. The channel #1 is a transmission channel (or a transmission link) between the first AP and the device connected to the first AP.

For another example, the packet loss rates may be packet loss rates respectively corresponding to multicast information of different rate levels. For example, the first AP sends a multicast frame at a rate #1, and the device connected to the first AP may feed back a packet loss rate corresponding to the rate #1.

Manner 3: The first AP obtains signal strength of the plurality of devices, and determines the communication quality of the devices based on the signal strength of the devices.

For example, the device connected to the first AP periodically feeds back signal strength of the device. A device with weak signal strength (for example, the signal strength is less than or equal to a threshold #2, and the threshold #2 is predefined or determined through negotiation, which is not limited in this embodiment) is a device with poor communication quality, and a device with strong signal strength (for example, the signal strength is greater than the threshold #2) is a device with good communication quality. For another example, a plurality of thresholds may be set, and signal strength is compared with different thresholds, to determine communication quality of different devices.

Manner 4: The first AP obtains signal-to-noise-plus-interference ratios of the plurality of devices, and determines the communication quality of the devices based on the signal-to-noise-plus-interference ratios of the devices.

Manner 5: The first AP obtains transmission delays of the plurality of devices, and determines the communication quality of the devices based on synchronization delays of the devices.

Manner 6: The first AP obtains image display quality (for example, screen artifacting degrees) of the plurality of devices, and determines the communication quality of the devices based on the image display quality of the devices.

Manner 7: The first AP obtains video playing fluency (for example, video playing stuttering degrees) of the plurality of devices, and determines the communication quality of the devices based on the video playing fluency of the devices.

For example, the packet loss rate, the delay, the signal strength, and the like may be understood as communication capability information of the device. The communication quality of a device with a strong communication capability is higher than that of a device with a weak communication capability.

It should be understood that the packet loss rate, the delay, the signal strength, and the like are merely examples for describing possible forms of determining the communication quality of the device, and do not constitute any limitation on the protection scope of the present disclosure. Other manners that can be used to determine the communication quality of the device also fall within the protection scope of the present disclosure. Examples are not described one by one herein again.

Further, in this embodiment, after obtaining the communication quality of the plurality of devices connected to the first AP, the first AP may group the plurality of connected devices into different device groups based on the communication quality of the plurality of devices. A method procedure shown in FIG. 2 further includes:

S220: The first AP groups the plurality of devices into at least two device groups based on the communication quality of the plurality of devices.

It should be noted that, in this embodiment, the first AP may not group the plurality of connected devices into device groups, but may consider transmission of a device with good communication quality in the connected devices.

For example, the first AP is connected to 10 devices, and communication quality of eight of the devices meets a requirement (for example, a delay meets a requirement, a packet loss rate meets a requirement, or a distance is short). When subsequently performing downlink data multicast, the first AP may only need to consider that the eight devices can normally receive multicast data, and may not consider the other two devices (for example, rejection information may indicate that access is rejected).

In this embodiment, a difference between devices with different communication quality is mainly considered. The following mainly describes a solution in which the first AP groups the plurality of devices into the at least two device groups based on the communication quality of the plurality of devices.

Communication quality of a device in a first device group in the at least two device groups is higher than communication quality of a device in a second device group.

Optionally, in this embodiment, the first AP may indicate, based on the rejection information, to reject access of a device with poor communication quality. For example, when the communication quality of the device in the second device group meets a first preset condition, the first AP sends the rejection information to the device in the second device group. The rejection information indicates that access is rejected. The first AP may indicate, based on the rejection information, at least one device not to perform access currently. The first preset condition may be a predefined or negotiated threshold (for example, a packet loss rate threshold, a delay threshold, or an image display quality threshold) of a parameter indicating communication quality.

For example, in this embodiment, before grouping the plurality of devices into the at least two device groups, the first AP may determine, in the following manner, that grouping into device groups can be performed:
Manner 1: The first AP determines, based on a preconfigured rule, that the plurality of devices are capable of being grouped into the at least two device groups.

Manner 2: The first AP receives authorization information from each of the plurality of devices. The authorization information indicates that grouping into the at least two device groups is supported. It may be understood that to remove a doubt of a user, a user authorization option and a configuration interface are provided for setting and adjusting a parameter related to device grouping. For example, a button is provided for related operations such as multicast settings, to notify that authorization is enabled and notify that the system may automatically performing grouping by default. This ensures that a device group with high communication quality almost has no packet loss (or stuttering and minimum delay), and a device group with low communication quality allows a packet loss (or stuttering and a delay). A user with poor communication quality is not advised to perform access.

Specifically, a grouping quantity of device groups and a quantity of devices included in the device group are default (for example, two groups by default) or may be adjusted within a specific range (for example, a group setting may be adjusted to be within 1 to N). This is not limited in this embodiment.

In a possible implementation, when the first AP determines the communication quality of the plurality of devices based on the packet loss rates of the plurality of devices, the first AP may group, into a plurality of device groups based on the packet loss rates, the devices connected to the first AP.

For example, the devices connected to the first AP include a device #1, a device #2, and a device #3. A packet loss rate of the device #1 is a packet loss rate #1, a packet loss rate of the device #2 is a packet loss rate #2, and a packet loss rate of the device #3 is a packet loss rate #3. The first AP classifies devices corresponding to packet loss rates that are less than a packet loss rate threshold #1 and that are in the packet loss rate #1, the packet loss rate #2, and the packet loss rate #3 into one device group, and classifies devices corresponding to packet loss rates that are greater than the packet loss rate threshold #1 and that are in the packet loss rate #1, the packet loss rate #2, and the packet loss rate #3 into another device group. For example, if the packet loss rate #1 and the packet loss rate #2 are less than the packet loss rate threshold #1, the device #1 and the device #2 are devices in a device group #1; and if the packet loss rate #3 is greater than the packet loss rate threshold #1, the device #3 is a device in a device group #2. It may be understood that, because a high packet loss rate leads to poor communication quality, communication quality of a device in the device group #1 is higher than communication quality of a device in the device group #2.

In another possible implementation, when the first AP determines the communication quality of the plurality of devices based on the distances of the plurality of devices, the first AP may group, into a plurality of device groups based on the distances, the devices connected to the first AP.

For example, the devices connected to the first AP include a device #1, a device #2, and a device #3. A distance between the device #1 and the first AP is a distance #1, a distance between the device #2 and the first AP is a distance #2, and a distance between the device #3 and the first AP is a distance #3. The first AP classifies devices corresponding to distances that are less than a distance threshold #1 and that are in the distance #1, the distance #2, and the distance #3 into one device group, and classifies devices corresponding to distances that are greater than a distance threshold #1 and that are in the distance #1, the distance #2, and the distance #3 into another device group. For example, if the distance #1 and the distance #2 are less than the distance threshold #1, the device #1 and the device #2 are devices in a device group #1; and if the distance #3 is greater than the distance threshold #1, the device #3 is a device in a device group #2. It may be understood that, because a large distance leads to poor communication quality, communication quality of a device in the device group #1 is higher than communication quality of a device in the device group #2.

The foregoing is merely an example for describing how the first AP groups, into the plurality of device groups, the devices connected to the first AP, and does not constitute any limitation on the protection scope of the present disclosure. A specific grouping manner of the first AP is not limited in this embodiment, and the first AP obtains the plurality of device groups through grouping based on different communication quality of the devices.

In this embodiment, after the first AP groups, into the plurality of device groups, the plurality of devices connected to the first AP, the first AP may send data to the device in the first device group and the device in the second device group at a first rate. The method procedure shown in FIG. 2 further includes:
S230: The first AP sends the data to the device in the first device group and the device in the second device group at the first rate.

Specifically, the first rate is determined based on a threshold of the first device group and a threshold of the second device group. The threshold of the first device group is different from the threshold of the second device group, the threshold of the first device group is determined based on the communication quality of the device in the first device group, the threshold of the second device group is determined based on the communication quality of the device in the second device group, and the data is sent in a multicast manner.

In a possible implementation, the first AP separately sets different packet loss rate thresholds for the plurality of device groups.

For example, the first AP sets a first packet loss rate threshold for the first device group in the plurality of device groups, and sets a second packet loss rate threshold for the second device group in the plurality of device groups. Because the communication quality of the devices in the first device group is higher than the communication quality of the devices in the second device group, the specified first packet loss rate threshold is lower than the second packet loss rate threshold. That is, in this embodiment, packet loss rate thresholds may be separately set for device groups with different communication quality, instead of setting a same packet loss rate threshold for all devices.

For example, the first AP may determine the first packet loss rate threshold based on the communication quality of the devices in the first device group. For example, an average value of packet loss rates of the devices in the first device group is used as the first packet loss rate threshold. For another example, a median value of the packet loss rates of the devices in the first device group is used as the first packet loss rate threshold. Similarly, the first AP may determine the second packet loss rate threshold based on the communication quality of the devices in the second device group. Details are not described herein again.

In another possible implementation, the first AP separately sets different redundancy thresholds for the plurality of device groups.

For example, the first AP sets a first redundancy threshold for the first device group in the plurality of device groups, and sets a second redundancy threshold for the second device group in the plurality of device groups. Because the communication quality of the devices in the first device group is higher than the communication quality of the devices in the second device group, the specified first redundancy threshold is higher than the second redundancy threshold. That is, in this embodiment, redundancy thresholds may be separately set for device groups with different communication quality, instead of setting a same redundancy threshold for all devices.

In still another possible implementation, the first AP separately sets different transmission delay thresholds for the plurality of device groups.

For example, the first AP sets a first transmission delay threshold for the first device group in the plurality of device groups, and sets a second transmission delay threshold for the second device group in the plurality of device groups. Because the communication quality of the devices in the first device group is higher than the communication quality of the devices in the second device group, the specified first transmission delay threshold is lower than the second transmission delay threshold. That is, in this embodiment, transmission delay thresholds may be separately set for device groups with different communication quality, instead of setting a same transmission delay threshold for all devices.

It should be understood that the packet loss rate threshold, the redundancy threshold, and the transmission delay threshold are merely examples for describing possible thresholds that can be configured by the first AP, and do not constitute any limitation on the protection scope of the present disclosure. Other thresholds related to communication quality may be further set, and examples are not described one by one herein again.

It should be further understood that a setting of the first rate needs to meet threshold requirements of different device groups.

For example, when the threshold of the first device group is the first packet loss rate threshold, and the threshold of the second device group is the second packet loss rate threshold, the first rate meets the following condition:
packet loss rates of all devices in the first device group are less than or equal to the first packet loss rate threshold, and packet loss rates of all devices in the second device group are less than or equal to the second packet loss rate threshold.

For another example, when the threshold of the first device group is the first redundancy threshold, and the threshold of the second device group is the second redundancy threshold, the first rate meets the following condition:
redundancy of all devices in the first device group is greater than or equal to the first redundancy threshold, and redundancy of all devices in the second device group is greater than or equal to the second redundancy threshold.

For another example, when the threshold of the first device group is the first transmission delay threshold, and the threshold of the second device group is the second transmission delay threshold, the first rate meets the following condition:
transmission delays of all devices in the first device group are less than or equal to the first transmission delay threshold, and transmission delays of all devices in the second device group are less than or equal to the second transmission delay threshold.

For ease of description, the following provides descriptions by using an example in which the threshold is the packet loss rate threshold. A case in which the threshold is another threshold is similar to the case in which the threshold is the packet loss rate threshold. Details are not described again.

Specifically, packet loss rate thresholds are separately set for device groups with different communication quality. Compared with a case in which a same packet loss rate threshold is set for all devices, in this case, it can be ensured that a device in a device group with high communication quality has almost no packet loss after decoding, and a packet loss rate after decoding of a device in a device group with low communication quality is lower than a specific packet loss rate. If a same packet loss rate is set for all devices, when sending multicast data, the first AP considers a unified packet loss rate (for example, a packet loss rate of a device with poor communication quality), so that a device with good communication quality cannot play an advantage of the device.

For example, the first AP may set redundancy, to implement a case in which the device in the device group with high communication quality has almost no packet loss after decoding, and the packet loss rate after decoding of the device in the device group with low communication quality is lower than the specific packet loss rate.

Specifically, after determining packet loss rate thresholds respectively corresponding to different device groups, the first AP may determine, based on the packet loss rate thresholds of the different device groups, a sending rate for sending multicast data. Specifically, the first AP first encodes to-be-sent multicast data in a preset encoding manner, to obtain at least one code block. The preset encoding manner includes but is not limited to the fountain encoding manner described above. It should be understood that the encoding manner is not limited in this embodiment.

For ease of description, the following provides descriptions by using fountain encoding as an example. In other words, code blocks obtained after encoding include a signal code block and a redundant code block.

In this embodiment, there are the following two implementations in which the first AP determines the sending rate for sending the multicast data.

Implementation #1: The first AP sends the multicast data at a single rate. For example, the first AP sends the signal code block at the first rate.

In Implementation #1, when determining a rate for sending the code block, the first AP selects a rate that can satisfy packet loss rate thresholds corresponding to different device groups. The first device group and the second device group are used as an example. The first rate meets the following condition:

A packet loss rate of a code block received by the device in the first device group is less than the first packet loss rate threshold, and a packet loss rate of a code block received by the device in the second device group is less than the second packet loss rate threshold.

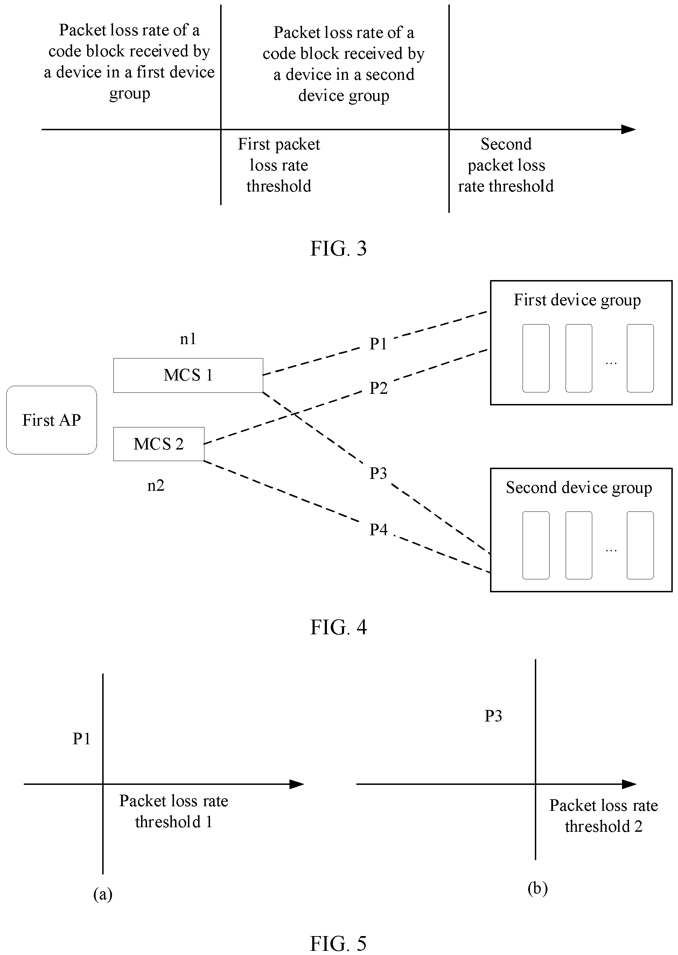

For ease of understanding, the packet loss rate threshold in Implementation #1 is described with reference to FIG. 3. FIG. 3 is a diagram of a packet loss rate threshold according to the present disclosure. It can be learned from

FIG. 3 that the packet loss rate of the code block received by the device in the first device group is less than the first packet loss rate threshold, the packet loss rate of the code block received by the device in the second device group is less than the second packet loss rate threshold, and the first packet loss rate threshold is less than the second packet loss rate threshold.

Implementation #2: The first AP sends the multicast data at a plurality of rates.

For example, the first AP may group, into a plurality of code block groups, at least one code block obtained by encoding the to-be-sent multicast data, and different code block groups are sent at different transmission rates.

In a possible implementation, the first AP may group the at least one code block into the plurality of code block groups based on importance of different code blocks in the at least one code block for decoding, and a transmission rate of a code block group with high importance meets a packet loss rate threshold requirement of a receiving device.

In another possible implementation, the first AP may group the at least one code block into the plurality of code block groups based on different code block types of the at least one code block. For example, a signal code block in the at least one code block is used as one code block group, and a redundant code block in the at least one code block is used as one code block group. A transmission rate of the signal code block meets a packet loss rate threshold requirement of the receiving device.

It should be understood that, in this embodiment, a quantity of code block groups into which the first AP groups the at least one code block and a quantity of transmission rates used for transmission are not limited. For ease of description, an example in which the first AP separately sends the signal code block and the redundant code block at dual rates is used below for description. A manner in which the first AP sends the multicast data at a plurality of (for example, more than two) transmission rates is similar to the manner in which the first AP sends the multicast data at dual rates. Details are not described herein again.

For example, the first AP sends the signal code block at the first rate, and sends the redundant code block at a second rate. The second rate is different from the first rate.

In Implementation #2, when determining the first rate for sending the signal code block, the first AP selects a rate that can satisfy packet loss rate thresholds corresponding to different device groups. The first device group and the second device group are used as an example. The first rate meets the following condition:
A packet loss rate of a signal code block received by the device in the first device group is less than the first packet loss rate threshold, and a packet loss rate of a signal code block received by the device in the second device group is less than the second packet loss rate threshold.

For ease of understanding, the packet loss rate threshold in Implementation #2 is described with reference to FIG. 4 and FIG. 5. FIG. 4 is a diagram of a dual-rate sending example according to the present disclosure. It can be learned from FIG. 4 that a rate 1 (MCS 1) is a sending rate of the signal code block (or a source symbol), a rate 2 (MCS 2) is a sending rate of the redundant code block (or a redundant symbol), n1 is a quantity of sent signal code blocks, n2 is a quantity of sent redundant code blocks, p1 is a packet loss rate of the signal code block, and p2 is a packet loss rate of the redundant code block, N is a quantity of code blocks that may be completely decoded, and MCS1/MCS2=n1/n2.

For the devices in the first device group, n1*(1-p1)+n2*(1-p2)≥N, p1<Packet loss rate threshold 1 (as shown in (a) in FIG. 5), and both p1 and p2 are packet loss rates of devices in the first device group. P1 is a packet loss rate of a signal code block received by the device in the first device group, and p2 is a packet loss rate of a redundant code block received by the device in the first device group.

For the devices in the second device group, n1*(1-p3)+n2*(1-p4)≥N, p3<Packet loss rate threshold 2 (as shown in (b) in FIG. 5), and both p3 and p4 are packet loss rates of devices in the second device group. p3 is a packet loss rate of a signal code block received by the device in the second device group, and p4 is p3 is a packet loss rate of a redundant code block received by the device in the second device group.

Further, after determining the sending rate, the first AP may send the at least one code block in a multicast manner, and the receive end may feed back, in a unicast manner, a code block that is not received.

For example, the first AP broadcasts (or multicasts) the at least one code block to the devices connected to the first AP, and a first device in the devices connected to the first AP receives and decodes the code block broadcast by the first AP. When a code block cannot be decoded, a user-defined feedback frame (for example, a first feedback frame) is used to send, to the first AP, a request for retransmitting a code block (for example, a first code block) in a frame with a specified number. The first code block is one of the at least one code block, and the first device is one of the devices connected to the first AP. The first AP may retransmit the first code block to the first device in the unicast manner.

In addition, it should be noted that the device connected to the first AP may periodically report communication quality. In other words, when communication quality of a device changes, the device may send updated communication quality to notify the first AP, and the first AP may re-determine the device in the first device group and the device in the second device group based on the received updated communication quality.

In the communication method shown in FIG. 2, the first AP may set different thresholds for device groups with different communication quality, and when determining the sending rate of the multicast data, consider different thresholds corresponding to different device groups. When two threshold requirements are respectively met through measurement for the plurality of device groups, the multicast data is sent at a maximum sending rate that satisfies this case, to help increase a multicast bandwidth.

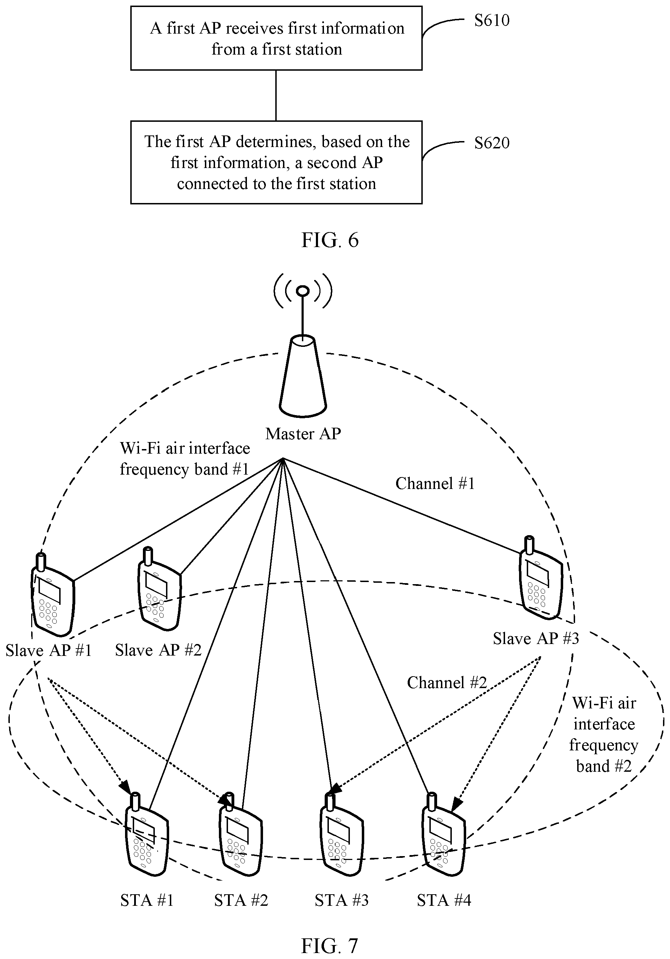

The present disclosure further provides another communication method, to establish hierarchical networking. The following describes the communication method in detail with reference to FIG. 6. FIG. 6 is a schematic flowchart of another communication method according to the present disclosure. The following step is included.

S610: A first AP receives first information from a first station, or a first station sends first information to a first AP.

Specifically, the first information includes information about at least one second AP respectively corresponding to at least one beacon frame received by the first station, and signal strength indication (RSSI) information of the at least one beacon frame.

For example, the first station may measure whether there is a second AP around the first station, and notify, by using an activation (action) frame, the first AP of a second AP around the first station and RSSI strength of a beacon frame sent by the second AP.

Optionally, the first station may further notify the first AP of packet loss rate information based on the first information. In other words, the first information further includes the packet loss rate information. The packet loss rate information includes packet loss rates of multicast frames of different rate levels.

It should be noted that, in this embodiment, the first AP is a multicast source, and is configured to transmit multicast data. Specifically, the first AP may trigger a multicast (or broadcast) function of the first AP by using an upper-layer application.

For example, the first AP is a mobile phone, and projection of the mobile phone triggers enabling of a soft AP function through broadcast, and projection data starts to be multicast.

A search service of another terminal in a communication system is triggered by an upper-layer application. For example, projection multicast is performed, to join a service to start to obtain multicast data. A terminal that joins first becomes a second AP (or referred to as a connected terminal), and a terminal that joins later becomes a station (or referred to as a connectionless terminal or a connectionless STA).

In a possible implementation, a frequency band in which the first AP operates is different from a frequency band in which the second AP operates.

Further, the first AP may determine, based on the received first information, that the first station establishes a connection to the second AP. The method procedure shown in FIG. 6 further includes the following step.

S620: The first AP determines, based on the first information, the second AP connected to the first station.

For example, the first AP may select, from the at least one second AP included in the first information, a second AP with best signal quality for the station as the second AP connected to the first station.

It should be understood that the first AP may receive the first information sent by each station in the system. The first AP may determine, based on first information reported by different stations, a second AP connected to each station. For ease of description, in this embodiment, an example in which the first AP receives first information sent by a station is used for description.

For example, the system includes four stations (for example, a station #1, a station #2, a station #3, and a station #4), and the first AP may receive four pieces of first information (for example, first information #1, first information #2, first information #3, and first information #4) respectively sent by the four stations. For example, the first AP receives the first information #1 from the station #1, and the first information #1 includes information about a second AP measured by the station #1 and information indicating signal strength of the second AP; the first AP receives the first information #2 from the station #2, and the first information #2 includes information about a second AP measured by the station #2 and information indicating signal strength of the second AP; the first AP receives the first information #3 from the station #3, and the first information #3 includes information about a second AP measured by the station #3 and information indicating signal strength of the second AP; and the first AP receives first information #4 from a station #4, and the first information #4 includes information about a second AP measured by the station #4 and information indicating signal strength of the second AP.

In this embodiment, the first AP may also be referred to as a master AP, and the second AP may be referred to as a slave AP. A plurality of levels of APs and stations are networked by using the foregoing networking process. In addition, the first AP and the second AP may be soft APs.

Further, to construct multi-level networking, the first AP may further select a connected AP (for example, a third AP) for the second AP. For example, the first AP selects the second AP as the connected AP for the first station, and the first AP may further determine, based on information reported by the second AP, the third AP connected to the second AP. By analogy, the first AP may further determine, based on the information reported by the second AP, the AP connected to the second AP. In this way, multi-level networking may be constructed.

A method procedure shown in FIG. 6 provides a manner of networking the plurality of levels of APs and stations, to implement end-to-end direct networking and improve a networking scale.

For ease of understanding, two-level networking is used as an example to describe, with reference to FIG. 7, networking established in the procedure shown in FIG. 6. FIG. 7 is a diagram of two-layer networking and two frequency bands.

The networking shown in FIG. 7 includes three roles: a master AP, slave APs (a slave AP #1, a slave AP #2, and a slave AP #3 shown in FIG. 7), and a pure STA (a STA #1, a STA #2, a STA #3, and a STA #4 shown in FIG. 7). The master AP is a multicast source, and the slave AP may be understood as a STA of the master AP and an AP of the pure STA.

Specifically, a Wi-Fi air interface frequency band #1 covers all devices (for example, covers the master AP, the slave AP, and the pure STA). One device is used as a master AP, and a device within a connection capability of the master AP is used as a slave AP. The slave AP is a connected device in devices connected to the master AP, and other devices are connectionless devices. Compared with the master AP, a device with a good connection is selected as the slave AP.

A Wi-Fi air interface frequency band #2 is between the slave AP and the pure STA, and there is a connection between the slave AP and the pure STA.

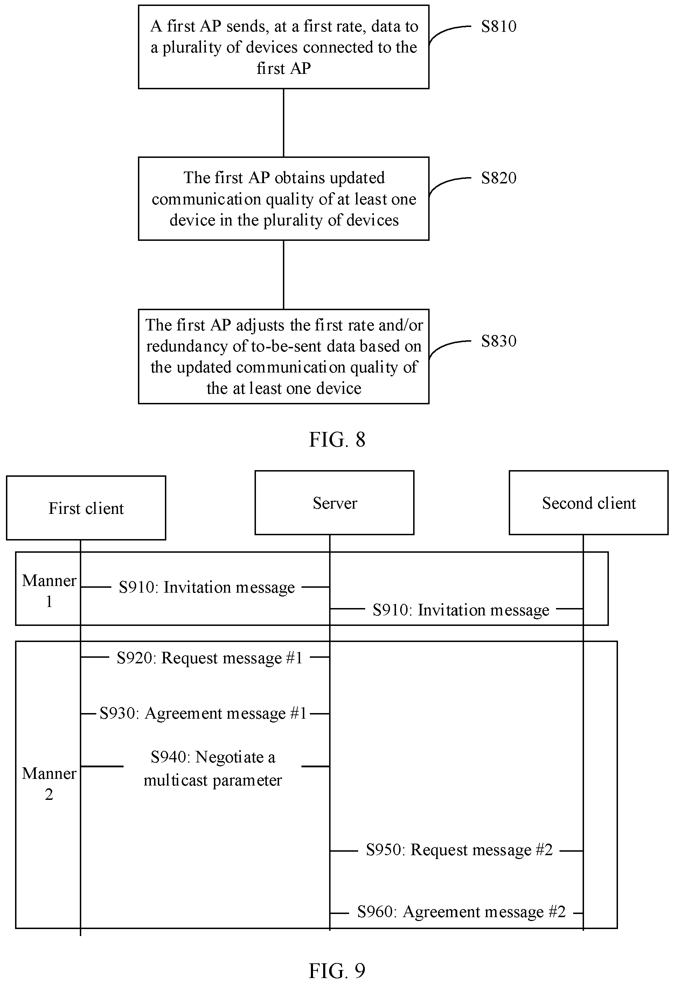

In addition, the present disclosure further provides a communication method, to improve reliability of Wi-Fi multicast transmission. The following describes the communication method in detail with reference to FIG. 8.

FIG. 8 is a schematic flowchart of still another communication method according to the present disclosure. The following steps are included.

S810: A first AP sends, at a first rate, data to a plurality of devices connected to the first AP.

For example, the first rate in this embodiment may be a transmission rate determined in the communication method shown in FIG. 2, or may be any determined rate.

Specifically, in this embodiment, the first AP may adjust a rate and/or redundancy of to-be-sent data based on updated communication quality of at least one device. The method shown in FIG. 8 further includes:

S820: The first AP obtains the updated communication quality of the at least one device in the plurality of devices.

In a possible implementation, in this embodiment, the first AP may obtain the updated communication quality of the at least one device in the method for obtaining communication quality of the plurality of devices shown in the communication method shown in FIG. 2.

In another possible implementation, in this embodiment, because the first AP has established a communication connection to the plurality of devices connected to the first AP, the first AP may obtain the updated communication quality of the at least one device in a detection manner.

For example, the first AP sends a detection signal to the at least one device. The detection signal is used to detect the communication quality (for example, detect a packet loss situation) of the at least one device. The first AP receives second indication information from the at least one device. The second indication information indicates the communication quality of the device.

In a possible implementation, the at least one device may be any at least one device in the plurality of devices connected to the first AP. For example, the first AP detects a receiving status of all connected devices.

In another possible implementation, the at least one device may be a device whose communication quality meets a second preset condition in the devices connected to the first AP. For example, the first AP may detect only 10% to 30% devices with lowest signal strength in the plurality of devices connected to the first AP. Air interface overheads can be greatly reduced.

In addition, the first AP may periodically detect a receiving status of the device connected to the first AP. For example, detection is performed two to five times per second.

For example, the second indication information includes at least one of the following:
an SINR, an air interface packet loss rate, and a decoding packet loss rate.

S830: The first AP adjusts the first rate and/or redundancy of to-be-sent data based on the updated communication quality of the at least one device.

In a possible implementation, the second indication information indicates that the signal strength decreases and the packet loss rate increases, and the first AP determines to reduce the transmission rate.

In another possible implementation, the second indication information indicates that noise strength increases and a packet loss rate increases, and the first AP determines to increase redundancy of multicast information encoding.

In still another possible implementation, the second indication information indicates that the air interface packet loss rate is less than a first preset threshold, and the first AP determines to increase the transmission rate. The first preset threshold may be any predefined or negotiated value. This is not limited in the present disclosure.

In still another possible implementation, the second indication information indicates that the decoding packet loss rate is less than a second preset threshold, and the first AP determines to increase the transmission rate and/or reduce redundancy of multicast information encoding. The second preset threshold may be any predefined or negotiated value. This is not limited in the present disclosure.

It should be understood that the foregoing several implementations are merely examples for describing a case in which the first AP may adjust the transmission rate based on the updated communication quality of the at least one device, and do not constitute any limitation on the protection scope of the present disclosure. The first AP may further have another adjustment manner, and this is not limited herein.

In embodiments shown in FIG. 2 to FIG. 8, multicast communication is involved. The present disclosure further provides another communication method, to reduce multicast communication overheads. For ease of understanding, the following describes in detail a multicast communication establishment method in the present disclosure with reference to FIG. 9.

FIG. 9 is a schematic flowchart of still another communication method according to the present disclosure.

It should be understood that, after establishing a multicast group, a server may send a multicast-related parameter to a client that is actively invited by the server to join multicast or a client that actively requests to join multicast. In this embodiment, a process in which the server establishes the multicast group is not limited, and mainly relates to how to reduce multicast transmission overheads.

The server in this embodiment may be the AP (for example, a first AP) that sends multicast information in the foregoing embodiments. The client may be an AP (for example, a second AP) or a station (for example, a STA) that receives the multicast information.

Specifically, in this embodiment, the server sends a multicast parameter to the client in the following two manners:
Manner 1: The server actively sends, to the client, an invitation message for joining multicast.

For example, in Manner 1, the server actively sends the multicast parameter. In S910 shown in FIG. 9, the server sends an invitation message. The invitation message includes the multicast parameter.

For example, in this embodiment, the server may send the invitation message in a communication manner other than a current multicast communication link. For example, if the server currently prepares to use 5G Wi-Fi multicast communication, the server may send the invitation message through another Wi-Fi channel (for example, 2.4G Wi-Fi), Greentooth, Bluetooth, a millimeter wave, ZigBee, or the like.

Specifically, after the multicast group is established, the server may actively send the multicast invitation, to invite the client to join multicast. For example, the server sends the invitation message, and uses the invitation message to carry the multicast parameter, so that the client that receives the invitation message can learn of multicast-related information and join multicast.

In a possible implementation, in this embodiment, the client may establish a virtual multicast link, so that the client may feed back information (for example, uplink data) to the server through the virtual multicast link.

In this implementation, the multicast parameter includes but is not limited to:
a multicast key, a multicast rate, a virtual multicast source address, a multicast destination address, a multicast destination port, a multicast source port, a multicast type, and the like.

It should be understood that, in this implementation, a difference from current multicast establishment lies in that, the invitation message includes a virtual multicast source address, so that the client can establish the virtual multicast link based on the virtual multicast source address.

Specifically, in this implementation, if the client agrees to an invitation of the server, the client may establish the virtual multicast link to the server based on the virtual multicast source address, and send information to the server through the virtual multicast link. If the client does not accept the invitation from the server, the client may reject the invitation from the server by using rejection information.

For example, a link (for example, a unicast link between a client that is the first to join multicast and the server) is actually maintained between the server and a plurality of clients, and a format of uplink data sent by the client to the server may be:

| | | |
|---|---|---|
| DMAC | SMAC | Uplink data, including actual SMAC |

The DMAC indicates a destination MAC address of the uplink data (which may be understood as a MAC address of the server, namely, a multicast destination address carried in the invitation message), and the SMAC indicates a virtual source MAC address (namely, a virtual multicast source address carried in the invitation message) of the uplink data. An actual source MAC address (for example, MAC addresses of different clients) is reflected in the uplink data. The server may distinguish, with reference to the actual MAC address in the uplink data, a specific client to which the uplink data belongs.

Virtual source MAC addresses of uplink data sent by different clients are the same, and actual source MAC addresses of the different clients are carried in the uplink data of the clients.

The virtual multicast source address is carried in the invitation message, so that a unicast link may be established between the server and the plurality of clients (for example, the unicast link is established between the client that is the first to join multicast and the server) to transmit uplink data, and there is no need to establish a unicast link for each client, to reduce air interface overheads.

In another possible implementation, in this embodiment, a virtual multicast link may be established on both the client and the server, so that the client may feed back information to the server through the virtual multicast link, and the server may also send information to the server through the virtual multicast link.

In this implementation, the multicast parameter includes but is not limited to:
a multicast key, a multicast rate, a virtual multicast source address, a virtual multicast destination address, a multicast destination port, a multicast source port, a multicast type, and the like.

It should be understood that, in this implementation, a difference from current multicast establishment lies in that, the invitation message includes the virtual multicast source address and the virtual multicast destination address, so that the client can establish the virtual multicast link based on the virtual multicast source address, and the server may also establish the virtual multicast link based on the virtual multicast destination address.

Specifically, in this implementation, if the client agrees to the invitation of the server, the client may establish a virtual multicast link #1 to the server based on the virtual multicast source address, and send information to the server through the virtual multicast link #1; and the server may establish a virtual multicast link #2 to the client based on the virtual multicast destination address, and send information to the client through the virtual multicast link #2.

For example, a link (for example, a unicast link between the client that is the first to join multicast and the server) is actually maintained between the client and the server, and a format of downlink multicast data sent by the server to the client may be:

| | | |
|---|---|---|
| DMAC | SMAC | Downlink data, including actual DMAC |

The DMAC indicates a virtual destination MAC address (namely, the virtual multicast destination address carried in the invitation message) of the multicast data, and the SMAC indicates a source MAC address of the multicast data (which may be understood as a MAC address of the server). An actual destination MAC address (for example, MAC addresses of different clients) is reflected in the downlink data, and the client may distinguish, with reference to the actual destination MAC address in the downlink data, a specific client or specific clients to which the downlink data is to be sent.

For another example, a link (for example, a unicast link between a client that is the first to join multicast and the server) is actually maintained between the client and the server, and a format of uplink data sent by the client to the server may be:

| | | |
|---|---|---|
| DMAC | SMAC | Uplink data, including actual SMAC |

The DMAC indicates a destination MAC address of the uplink data (which may be understood as a MAC address of the server, namely, a multicast destination address carried in the invitation message), and the SMAC indicates a virtual source MAC address (namely, a virtual multicast source address carried in the invitation message) of the uplink data. An actual source MAC address (for example, MAC addresses of different clients) is reflected in the uplink data. The server may distinguish, with reference to the actual MAC address in the uplink data, a specific client to which the uplink data belongs.

Manner 2: The client actively requests to join multicast.

In Manner 2, the procedure shown in FIG. 9 includes:
S920: The first client sends a request message #1 to the server.

The request message #1 is used to request to join multicast. The first client in this embodiment may be a device (for example, a second AP or a first station) connected to the first AP in the foregoing embodiments. The request message #1 carries an actual MAC address, an IP address, and the like of the first client.

For example, in this embodiment, the first client may send the request message #1 in a communication manner other than a current multicast communication link. For example, the first client sends the invitation message in the communication manner other than the current multicast communication link. Currently, if the first client prepares to use 5G Wi-Fi multicast communication, the first client may send the request message #1 through another Wi-Fi channel (for example, 2.4G Wi-Fi), Greentooth, Bluetooth, a millimeter wave, ZigBee, or the like.

Further, after receiving the request message #1 sent by the first client, the server determines that the first client is a client that is the first to request to join multicast, and the server may first establish a unicast link to the first client that is the first to request to join multicast. The method procedure shown in FIG. 9 further includes:
S930: The server sends an agreement message #1 to the first client.

The agreement message #1 indicates that the first client is allowed to join multicast.

Specifically, after the server allows the first client to join the multicast, the first client and the server may establish a unicast link and negotiate the multicast parameter.

The method procedure shown in FIG. 9 further includes:
S940: The server and the first client negotiate the multicast parameter.

For example, the server and the first client may negotiate the multicast parameter in a Wi-Fi communication manner.

In a possible implementation, in this embodiment, the client establishes the virtual multicast link, so that the client may feed back information to the server through the virtual multicast link.

In this implementation, the multicast parameter obtained through negotiation between the server and the first client includes but is not limited to:
a multicast key, a multicast rate, a virtual multicast source address, a multicast destination address, a multicast destination port, a multicast source port, a multicast type, and the like.

It should be understood that, in this implementation, a difference from current multicast establishment lies in that, the multicast parameter obtained through negotiation includes the virtual multicast source address, so that the client can establish the virtual multicast link based on the virtual multicast source address.

In another possible implementation, in this embodiment, a virtual multicast link is established on both the client and the server, so that the client may feed back information to the server through the virtual multicast link, and the server may also send information to the server through the virtual multicast link.

In this implementation, the multicast parameter obtained through negotiation between the server and the first client includes but is not limited to:
a multicast key, a multicast rate, a virtual multicast source address, a virtual multicast destination address, a multicast destination port, a multicast source port, a multicast type, and the like.

It should be understood that, in this implementation, a difference from current multicast establishment lies in that, the multicast parameter obtained through negotiation includes the virtual multicast source address and the virtual multicast destination address, so that the client can establish the virtual multicast link based on the virtual multicast source address, and the server may also establish the virtual multicast link based on the virtual multicast destination address.

In this embodiment, different devices correspond to a same virtual multicast source address, instead of an address of a specific client, which is equivalent to an established virtual multicast link. For a client that is the second to request to join multicast to a client that is the N^{th} to request to join multicast, the server may not need to establish the actual multicast link, but send the multicast parameter to the client that requests to join multicast.

For example, a second client requests to join multicast. The method procedure shown in FIG. 9 further includes:
S950: The second client sends a request message #2 to the server.
S960: The server sends an agreement message #2 to the second client.

Specifically, the agreement message #2 carries the multicast parameter negotiated between the first client and the server. It should be noted that, the multicast communication process shown in FIG. 9 differs from existing multicast communication in that: a virtual link is established on the client (for example, a source address in the format of the uplink data is the virtual multicast source address, and an actual source address is carried in the uplink data), link quality information is fed back to the server through the virtual multicast channel, and there is no need to establish a Wi-Fi unicast channel for each client, to break through a chip resource bottleneck and reduce air interface overheads.

The communication method may be implemented by providing a debug application programming interface (API) or a debug log, and is easy to debug.

It should be understood that sequence numbers of the foregoing processes do not mean execution sequences. The execution sequence of the processes should be determined based on functions and internal logic of the processes, and should not be construed as any limitation on implementation processes of embodiments of the present disclosure.

It should be further understood that, in embodiments of the present disclosure, unless otherwise stated or there is a logic conflict, terms and/or descriptions in different embodiments are consistent and may be mutually referenced, and technical features in different embodiments may be combined based on an internal logical relationship thereof, to form a new embodiment.

For example, any one or more of the communication method shown in FIG. 2, the communication method shown in FIG. 6, the communication method shown in FIG. 8, and the communication method shown in FIG. 9 may be combined into a new embodiment. For example, hierarchical networking is established based on the communication method shown in FIG. 6, the master AP sets different packet loss rate thresholds for the slave AP and the STA in the hierarchical networking in the communication method shown in FIG. 2, and the master AP may detect a receiving status of the slave AP and/or the STA in the communication method shown in FIG. 8, to adjust the transmission rate.

Combinations of the foregoing embodiments are not described one by one by using examples.

It should be further understood that in some of the foregoing embodiments, a device (for example, the first AP or the second device) in an existing network architecture is mainly used as an example for description. It should be understood that a specific form of the device is not limited in embodiments of the present disclosure. For example, all devices that can implement a same function in the future are applicable to embodiments of the present disclosure.

It may be understood that, in the foregoing method embodiments, methods and operations implemented by the devices (for example, the first AP and the second device) may alternatively be implemented by a component (for example, a chip or a circuit) of the device.

The communication methods provided in embodiments of the present disclosure are described above in detail with reference to FIG. 2 to FIG. 9. The foregoing communication methods are mainly described from a perspective of the first AP. It can be understood that, to implement the foregoing functions, the first AP includes corresponding hardware structures and/or software modules for performing the functions.

A person skilled in the art should be able to be aware that, in combination with units and algorithm steps of the examples described in embodiments disclosed in this specification, the present disclosure may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present disclosure.

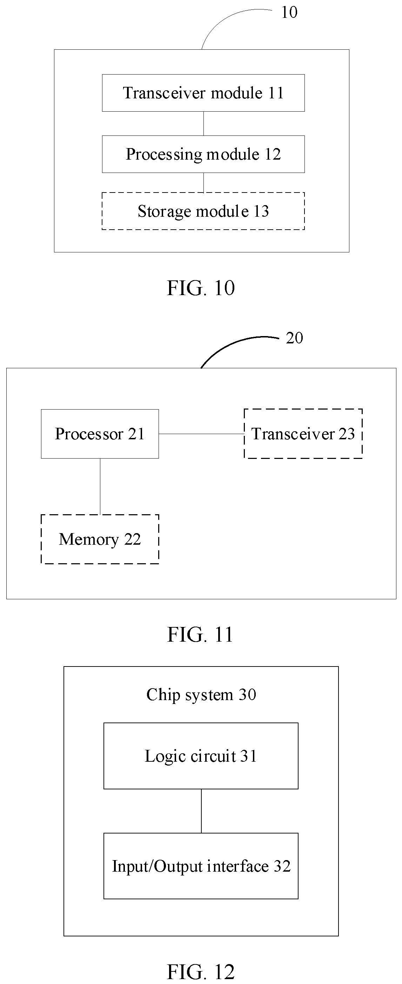

The first AP provided in embodiments of the present disclosure is described in detail below with reference to FIG. 10 to FIG. 12. It should be understood that descriptions of apparatus embodiments correspond to the descriptions of the method embodiments. Therefore, for content that is not described in detail, refer to the method embodiments above. For brevity, details of a part of content are not described herein again.

In embodiments of the present disclosure, the first AP may be divided into functional modules based on the method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of the present disclosure, module division is an example, and is merely a logical function division. In actual implementation, another division manner may be used. Descriptions are provided below by using an example in which each functional module is obtained through division based on each corresponding function.

FIG. 10 is a block diagram of a communication apparatus 10 according to an embodiment of the present disclosure. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, for the apparatus to implement an action of the device in the foregoing method embodiments.

In a first design, the apparatus 10 may correspond to the first AP in the foregoing method embodiments, or may be a component (for example, a chip) of the first AP.

The apparatus 10 may implement a corresponding step or procedure performed by the first AP in the foregoing method embodiments. The transceiver module 11 may be configured to perform receiving and sending related operations of the first AP in the foregoing method embodiments. The processing module 12 may be configured to perform a processing related operation of the first AP in the foregoing method embodiments.

In a possible implementation, the transceiver module 11 is configured to obtain communication quality of a plurality of devices connected to the communication apparatus. The processing module 12 is configured to group the plurality of devices into at least two device groups based on the communication quality of the plurality of devices. Communication quality of a device in a first device group in the at least two device groups is better than communication quality of a device in a second device group. The transceiver module 11 is configured to send data to the device in the first device group and the device in the second device group at a first rate. The first rate is determined based on a threshold of the first device group and a threshold of the second device group. The threshold of the first device group is different from the threshold of the second device group, the threshold of the first device group is determined based on the communication quality of the device in the first device group, the threshold of the second device group is determined based on the communication quality of the device in the second device group, and the data is sent in a multicast manner.

In another possible implementation, the transceiver module 11 is configured to receive first information from a first station STA. The first information includes information about at least one second AP respectively corresponding to at least one beacon frame received by the first STA, and received signal strength indicator RSSI information of the at least one beacon frame. The processing module 12 is configured to determine, based on the first information, a second AP that establishes a connection to the first STA. The second AP is one of the at least one second AP. The transceiver module 11 is configured to send first indication information to the first STA. The first indication information indicates the first STA to establish a connection to the second AP. The first AP is a device that sends multicast data, and the at least one second AP and the first STA are devices connected to the first AP.

In still another possible implementation, the transceiver module 11 is configured to send, at a first rate, data to a plurality of devices connected to the first AP. The transceiver module 11 is configured to obtain updated communication quality of at least one device in the plurality of devices. The processing module 12 is configured to adjust the first rate and/or redundancy of to-be-sent data based on the updated communication quality of the at least one device.

When the apparatus 10 is configured to perform the method in FIG. 2, the transceiver module 11 may be configured to perform steps of receiving and sending information in the method, for example, steps S210 and S230; and the processing module 12 may be configured to perform a processing step in the method, for example, step S220.

When the apparatus 10 is configured to perform the method in FIG. 6, the transceiver module 11 may be configured to perform steps of receiving and sending information in the method, for example, step S610; and the processing module 12 may be configured to perform a processing step in the method, for example, step S620.

When the apparatus 10 is configured to perform the method in FIG. 8, the transceiver module 11 may be configured to perform steps of receiving and sending information in the method, for example, steps S810 and S820; and the processing module 12 may be configured to perform a processing step in the method, for example, step S830.

When the apparatus 10 is configured to perform the method in FIG. 9, the transceiver module 11 may be configured to perform steps of receiving and sending information in the method, for example, steps S910, S920, S930, S940, S950, and S960; and the processing module 12 may be configured to perform a processing step in the method.

It should be understood that a specific process in which the units perform the foregoing corresponding steps is described in detail in the foregoing method embodiments, and for brevity, details are not described herein.

It should be further understood that the apparatus 10 herein is embodied in a form of a functional module. The term "module" herein may be an application-specific integrated circuit (ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the first AP) in the foregoing methods. The function may be implemented by hardware, or may be implemented by hardware executing corresponding software. The hardware or software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform receiving and sending operations and processing related operations in the method embodiments.

In addition, the transceiver module 11 may alternatively be a transceiver circuit (for example, may include a receiving circuit and a sending circuit), and the processing module may be a processing circuit.

FIG. 11 is a diagram of another communication apparatus 20 according to an embodiment of the present disclosure. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 11, the apparatus 20 further includes a memory 22, and the memory 22 is configured to store a computer program or instructions and/or data. The memory 22 may be integrated with the processor 21, or may be disposed separately. Optionally, there are one or more memories 22.

Optionally, as shown in FIG. 11, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the first AP in the foregoing method embodiments.

It should be understood that, the processor mentioned in embodiments of the present disclosure may be a central processing unit (CPU), and may further be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of the present disclosure may be a volatile memory and/or a non-volatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM). For example, the RAM may be used as an external cache. As an example instead of a limitation, the RAM includes the following plurality of forms: a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 12 is a diagram of a chip system 30 according to an embodiment of the present disclosure. The chip system 30 (or referred to as a processing system) includes a logic circuit 31 and an input/output interface 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of the present disclosure. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first AP in the foregoing method embodiments.

For example, the logic circuit 31 is configured to implement a processing-related operation performed by the first AP in the foregoing method embodiments, and the input/output interface 32 is configured to implement a sending and/or receiving related operation performed by the first AP in the foregoing method embodiments.

An embodiment of the present disclosure further provides a computer-readable storage medium. The computer-readable storage medium stores computer instructions for implementing the method performed by the first AP in the foregoing method embodiments.

An embodiment of the present disclosure further provides a computer program product, including instructions. When the instructions are executed by a computer, the method performed by the first AP in the foregoing method embodiments is implemented.

An embodiment of the present disclosure further provides a communication system, including the foregoing first AP and a device connected to the first AP.

For explanations and beneficial effects of related content in any one of the apparatuses provided above, refer to the corresponding method embodiment provided above. Details are not described herein again.

In the several embodiments provided in the present disclosure, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present disclosure are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like. For example, the usable medium includes but is not limited to any medium that can store program code such as a USB flash drive, a removable hard disk, a read-only memory (ROM), a random access memory (RAM), a magnetic disk, or an optical disc.

The foregoing descriptions are merely specific implementations of the present disclosure, but are not intended to limit the protection scope of the present disclosure. Therefore, the protection scope of the present disclosure shall be subject to the protection scope of the claims.

## Claims

1. A communication method for transmission in Wi-Fi multicast, comprising:
obtaining (S210), by a first access point AP, communication quality of a plurality of devices connected to the first AP;
grouping (S220), by the first AP, the plurality of devices into at least two device groups based on the communication quality of the plurality of devices, wherein communication quality of the devices in a first device group in the at least two device groups is better than communication quality of the devices in a second device group; and
sending (S230, S810), by the first AP, data to the devices in the first device group and the devices in the second device group at a first rate, wherein the first rate is a transmission rate, wherein the first rate is determined based on a threshold of the first device group and a threshold of the second device group, wherein
the threshold of the first device group is different from the threshold of the second device group, the threshold of the first device group is determined based on the communication quality of the devices in the first device group, the threshold of the second device group is determined based on the communication quality of the devices in the second device group, and the data is sent in a multicast manner;
wherein the method further comprises:
encoding, by the first AP, to-be-sent data in a preset encoding manner, to obtain at least one code block; and
sending, by the firstAP, a redundant code block in the at least one code block to the devices in the first device group and the devices in the second device group at a second rate; and
the sending, by the first AP, data to the devices in the first device group and the devices in the second device group at a first rate comprises:
sending, by the firstAP, a signal code block in the at least one code block to the devices in the first device group and the devices in the second device group at the first rate, wherein
the second rate is different from the first rate;
wherein after the sending (S810), by the first AP, data to the devices in the first device group and the devices in the second device group at a first rate, the method further comprises:
obtaining (S820), by the first AP, updated communication quality of at least one device in the plurality of devices; and
adjusting (S830), by the first AP, the first rate and/or redundancy of the to-be-sent data based on the updated communication quality of the at least one device.

2. The method according to claim 1, wherein when the communication quality of a device in the second device group meets a first preset condition, the method further comprises:
sending, by the first AP, rejection information to the device in the second device group, wherein the rejection information indicates that access is rejected.

3. The method according to claim 1 or 2, wherein the obtaining, by a first AP, communication quality of a plurality of devices connected to the first AP comprises:
obtaining, by the first AP, respective distances between the plurality of devices and the first AP, and determining the communication quality of the devices based on the distances between the devices and the first AP; or
obtaining, by the first AP, packet loss rates of the plurality of devices, and determining the communication quality of the devices based on the packet loss rates of the devices; or
obtaining, by the first AP, signal strength of the plurality of devices, and determining the communication quality of the devices based on the signal strength of the devices; or
obtaining, by the firstAP, signal-to-noise-plus-interference ratios of the plurality of devices, and determining the communication quality of the devices based on the signal-to-noise-plus-interference ratios of the devices; or
obtaining, by the first AP, transmission delays of the plurality of devices, and determining the communication quality of the devices based on the transmission delays of the devices; or
obtaining, by the firstAP, image display quality of the plurality of devices, and determining the communication quality of the devices based on the image display quality of the devices; or
obtaining, by the firstAP, video playing fluency of the plurality of devices, and determining the communication quality of the devices based on the video playing fluency of the devices.

4. The method according to any one of claims 1 to 3, wherein the threshold of the first device group is a first packet loss rate threshold, and the threshold of the second device group is a second packet loss rate threshold; or
the threshold of the first device group is a first threshold of redundancy of all devices in the first device group, first redundancy threshold, and the threshold of the second device group is a second threshold of redundancy of all devices in the second device group, second redundancy threshold; or
the threshold of the first device group is a first transmission delay threshold, and the threshold of the second device group is a second transmission delay threshold.

5. The method according to claim 4, wherein when the threshold of the first device group is the first packet loss rate threshold, and the threshold of the second device group is the second packet loss rate threshold, the first rate meets the following condition:
packet loss rates of all devices in the first device group are less than or equal to the first packet loss rate threshold, and packet loss rates of all devices in the second device group are less than or equal to the second packet loss rate threshold; or
when the threshold of the first device group is the first redundancy threshold, and the threshold of the second device group is the second redundancy threshold, the first rate meets the following condition:
redundancy of all devices in the first device group is greater than or equal to the first redundancy threshold, and redundancy of all devices in the second device group is greater than or equal to the second redundancy threshold; or
when the threshold of the first device group is the first transmission delay threshold, and the threshold of the second device group is the second transmission delay threshold, the first rate meets the following condition:
transmission delays of all devices in the first device group are less than or equal to the first transmission delay threshold, and transmission delays of all devices in the second device group are less than or equal to the second transmission delay threshold.

6. The method according to any one of claims 1 to 5, wherein the method further comprises:
receiving (S610), by the firstAP, first information from a first station STA, wherein the first information comprises information about at least one second AP respectively corresponding to at least one beacon frame received by the first STA, and received signal strength indicator RSSI information of the at least one beacon frame;
determining (S620), by the first AP based on the first information, a second AP that establishes a connection to the first STA, wherein the second AP is one of the at least one second AP; and
sending, by the first AP, first indication information to the first STA, wherein the first indication information indicates the first STA to establish a connection to the second AP, wherein
the first STA and the second AP are two of the plurality of devices.

7. The method according to claim 6, wherein the first STA belongs to the second group of devices, and the at least one second AP belongs to the first group of devices.

8. The method according to claim 1, wherein the at least one device is a device whose communication quality meets a second preset condition in the plurality of devices.

9. The method according to any one of claims 1 to 8, wherein that the first AP determines that the plurality of devices are capable of being grouped into at least two device groups comprises:
determining, by the firstAP based on a preconfigured rule, that the plurality of devices are capable of being grouped into the at least two device groups; or
receiving, by the first AP, authorization information from each of the plurality of devices, wherein the authorization information indicates that grouping into the at least two device groups is supported.

10. A chip, wherein the chip is installed on a communication apparatus, the chip comprises a processor and a communication interface, wherein the chip is configured to implement operations performed by the first access point, AP, in the method according to any one of claims 1 to 9.

## Patentansprüche

1. Kommunikationsverfahren zur Übertragung in einem Wi-Fi-Gruppenruf, umfassend:
Erlangen (S210), durch einen ersten Zugriffspunkt, AP, einer Kommunikationsqualität einer Vielzahl von Vorrichtungen, die mit dem ersten AP verbunden ist;
Gruppieren (S220), durch den ersten AP, der Vielzahl von Vorrichtungen in mindestens zwei Vorrichtungsgruppen basierend auf der Kommunikationsqualität der Vielzahl von Vorrichtungen, wobei eine Kommunikationsqualität der Vorrichtungen in einer ersten Vorrichtungsgruppe in den mindestens zwei Vorrichtungsgruppen besser als eine Kommunikationsqualität der Vorrichtungen in einer zweiten Vorrichtungsgruppe ist; und
Senden (S230, S810), durch den ersten AP, von Daten an die Vorrichtungen in der ersten Vorrichtungsgruppe und die Vorrichtungen in der zweiten Vorrichtungsgruppe mit einer ersten Rate, wobei die erste Rate eine Übertragungsrate ist, wobei die erste Rate basierend auf einem Schwellenwert der ersten Vorrichtungsgruppe und einem Schwellenwert der zweiten Vorrichtungsgruppe bestimmt wird, wobei
sich der Schwellenwert der ersten Vorrichtungsgruppe von dem Schwellenwert der zweiten Vorrichtungsgruppe unterscheidet, der Schwellenwert der ersten Vorrichtungsgruppe basierend auf der Kommunikationsqualität der Vorrichtungen in der ersten Vorrichtungsgruppe bestimmt wird, der Schwellenwert der zweiten Vorrichtungsgruppe basierend auf der Kommunikationsqualität der Vorrichtungen in der zweiten Vorrichtungsgruppe bestimmt wird und die Daten in einer Gruppenrufweise gesendet werden;
wobei das Verfahren ferner Folgendes umfasst:
Codieren, durch den ersten AP, zu sendender Daten in einer voreingestellten Codierungsweise, um mindestens einen Codeblock zu erlangen; und
Senden, durch den ersten AP, eines redundanten Codeblocks in dem mindestens einen Codeblock an die Vorrichtungen in der ersten Vorrichtungsgruppe und die Vorrichtungen in der zweiten Vorrichtungsgruppe mit einer zweiten Rate; und
das Senden, durch den ersten AP, von Daten an die Vorrichtungen in der ersten Vorrichtungsgruppe und die Vorrichtungen in der zweiten Vorrichtungsgruppe mit einer ersten Rate Folgendes umfasst:
Senden, durch den ersten AP, eines Signalcodeblocks in dem mindestens einen Codeblock an die Vorrichtungen in der ersten Vorrichtungsgruppe und die Vorrichtungen in der zweiten Vorrichtungsgruppe mit der ersten Rate, wobei sich die zweite Rate von der ersten Rate unterscheidet;
wobei das Verfahren nach dem Senden (S810), durch den ersten AP, von Daten an die Vorrichtungen in der ersten Vorrichtungsgruppe und die Vorrichtungen in der zweiten Vorrichtungsgruppe mit einer ersten Rate ferner Folgendes umfasst:
Erlangen (S820), durch den ersten AP, einer aktualisierten Kommunikationsqualität mindestens einer Vorrichtung in der Vielzahl von Vorrichtungen; und
Anpassen (S830), durch den ersten AP, der ersten Rate und/oder einer Redundanz der zu sendenden Daten basierend auf der aktualisierten Kommunikationsqualität der mindestens einen Vorrichtung.

2. Verfahren nach Anspruch 1, wobei das Verfahren, wenn die Kommunikationsqualität einer Vorrichtung in der zweiten Vorrichtungsgruppe eine erste voreingestellte Bedingung erfüllt, ferner Folgendes umfasst:
Senden, durch den ersten AP, von Ablehnungsinformationen an die Vorrichtung in der zweiten Vorrichtungsgruppe, wobei die Ablehnungsinformationen angeben, dass ein Zugriff abgelehnt wird.

3. Verfahren nach Anspruch 1 oder 2, wobei das Erlangen, durch einen ersten AP, einer Kommunikationsqualität einer Vielzahl von Vorrichtungen, die mit dem ersten AP verbunden ist, Folgendes umfasst:
Erlangen, durch den ersten AP, jeweiliger Abstände zwischen der Vielzahl von Vorrichtungen und dem ersten AP und Bestimmen der Kommunikationsqualität der Vorrichtungen basierend auf den Abständen zwischen den Vorrichtungen und dem ersten AP; oder
Erlangen, durch den ersten AP, von Paketverlustraten der Vielzahl von Vorrichtungen und Bestimmen der Kommunikationsqualität der Vorrichtungen basierend auf den Paketverlustraten der Vorrichtungen; oder
Erlangen, durch den ersten AP, einer Signalstärke der Vielzahl von Vorrichtungen und Bestimmen der Kommunikationsqualität der Vorrichtungen basierend auf der Signalstärke der Vorrichtungen; oder
Erlangen, durch den ersten AP, von Signal-Rausch-plus-Interferenz-Verhältnissen der Vielzahl von Vorrichtungen und Bestimmen der Kommunikationsqualität der Vorrichtungen basierend auf den Signal-Rausch-plus-Interferenz-Verhältnissen der Vorrichtungen; oder
Erlangen, durch den ersten AP, von Übertragungsverzögerungen der Vielzahl von Vorrichtungen und Bestimmen der Kommunikationsqualität der Vorrichtungen basierend auf den Übertragungsverzögerungen der Vorrichtungen; oder
Erlangen, durch den ersten AP, einer Bildanzeigequalität der Vielzahl von Vorrichtungen und Bestimmen der Kommunikationsqualität der Vorrichtungen basierend auf der Bildanzeigequalität der Vorrichtungen; oder
Erlangen, durch den ersten AP, einer Videowiedergabefließendheit der Vielzahl von Vorrichtungen und Bestimmen der Kommunikationsqualität der Vorrichtungen basierend auf der Videowiedergabefließendheit der Vorrichtungen.

4. Verfahren nach einem der Ansprüche 1 bis 3, wobei der Schwellenwert der ersten Vorrichtungsgruppe ein erster Paketverlustratenschwellenwert ist und der Schwellenwert der zweiten Vorrichtungsgruppe ein zweiter Paketverlustratenschwellenwert ist; oder
der Schwellenwert der ersten Vorrichtungsgruppe ein erster Schwellenwert einer Redundanz aller Vorrichtungen in der ersten Vorrichtungsgruppe, erster Redundanzschwellenwert, ist und der Schwellenwert der zweiten Vorrichtungsgruppe ein zweiter Schwellenwert einer Redundanz aller Vorrichtungen in der zweiten Vorrichtungsgruppe, zweiter Redundanzschwellenwert, ist; oder der Schwellenwert der ersten Vorrichtungsgruppe ein erster Übertragungsverzögerungsschwellenwert ist und der Schwellenwert der zweiten Vorrichtungsgruppe ein zweiter Übertragungsverzögerungsschwellenwert ist.

5. Verfahren nach Anspruch 4, wobei die erste Rate, wenn der Schwellenwert der ersten Vorrichtungsgruppe der erste Paketverlustratenschwellenwert ist und der Schwellenwert der zweiten Vorrichtungsgruppe der zweite Paketverlustratenschwellenwert ist, die folgende Bedingung erfüllt:
Paketverlustraten aller Vorrichtungen in der ersten Vorrichtungsgruppe sind kleiner als oder gleich dem ersten Paketverlustratenschwellenwert und Paketverlustraten aller Vorrichtungen in der zweiten Vorrichtungsgruppe sind kleiner als oder gleich dem zweiten Paketverlustratenschwellenwert; oder
die erste Rate, wenn der Schwellenwert der ersten Vorrichtungsgruppe der erste Redundanzschwellenwert ist und der Schwellenwert der zweiten Vorrichtungsgruppe der zweite Redundanzschwellenwert ist, die folgende Bedingung erfüllt:
eine Redundanz aller Vorrichtungen in der ersten Vorrichtungsgruppe ist größer als oder gleich dem ersten Redundanzschwellenwert und eine Redundanz aller Vorrichtungen in der zweiten Vorrichtungsgruppe ist größer als oder gleich dem zweiten Redundanzschwellenwert; oder
die erste Rate, wenn der Schwellenwert der ersten Vorrichtungsgruppe der erste Übertragungsverzögerungsschwellenwert ist und der Schwellenwert der zweiten Vorrichtungsgruppe der zweite Übertragungsverzögerungsschwellenwert ist, die folgende Bedingung erfüllt:
Übertragungsverzögerungen aller Vorrichtungen in der ersten Vorrichtungsgruppe sind kleiner als oder gleich dem ersten Übertragungsverzögerungsschwellenwert und Übertragungsverzögerungen aller Vorrichtungen in der zweiten Vorrichtungsgruppe sind kleiner als oder gleich dem zweiten Übertragungsverzögerungsschwellenwert.

6. Verfahren nach einem der Ansprüche 1 bis 5, wobei das Verfahren ferner Folgendes umfasst:
Empfangen (S610), durch den ersten AP, erster Informationen von einer ersten Station, STA, wobei die ersten Informationen Informationen über mindestens einen zweiten AP, die jeweils mindestens einem Bakenrahmen entsprechen, der durch die erste STA empfangen wird, und empfangene Signalstärkenindikatorinformationen, RSSI-Informationen, des mindestens einen Bakenrahmens umfassen;
Bestimmen (S620), durch den ersten AP basierend auf den ersten Informationen, eines zweiten AP, der eine Verbindung mit der ersten STA herstellt, wobei der zweite AP einer des mindestens einen zweiten AP ist; und
Senden, durch den ersten AP, erster Angabeinformationen an die erste STA, wobei die ersten Angabeinformationen der ersten STA angeben, eine Verbindung mit dem zweiten AP herzustellen, wobei die erste STA und der zweite AP zwei der Vielzahl von Vorrichtungen sind.

7. Verfahren nach Anspruch 6, wobei die erste STA zu der zweiten Gruppe von Vorrichtungen gehört und der mindestens eine zweite AP zu der ersten Gruppe von Vorrichtungen gehört.

8. Verfahren nach Anspruch 1, wobei die mindestens eine Vorrichtung eine Vorrichtung ist, deren Kommunikationsqualität eine zweite voreingestellte Bedingung in der Vielzahl von Vorrichtungen erfüllt.

9. Verfahren nach einem der Ansprüche 1 bis 8, wobei, dass der erste AP bestimmt, dass die Vielzahl von Vorrichtungen dazu fähig ist, in mindestens zwei Vorrichtungsgruppen gruppiert zu werden, Folgendes umfasst:
Bestimmen, durch den ersten AP basierend auf einer vorkonfigurierten Regel, dass die Vielzahl von Vorrichtungen dazu fähig ist, in die mindestens zwei Vorrichtungsgruppen gruppiert zu werden; oder
Empfangen, durch den ersten AP, von Autorisierungsinformationen von jeder der Vielzahl von Vorrichtungen, wobei die Autorisierungsinformationen angeben, dass das Gruppieren in die mindestens zwei Vorrichtungsgruppen unterstützt wird.

10. Chip, wobei der Chip auf einer Kommunikationseinrichtung installiert ist, der Chip einen Prozessor und eine Kommunikationsschnittstelle umfasst, wobei der Chip dazu konfiguriert ist, Vorgänge umzusetzen, die durch den ersten Zugriffspunkt, AP, in dem Verfahren nach einem der Ansprüche 1 bis 9 durchgeführt werden.

## Revendications

1. Procédé de communication pour la transmission en multidiffusion Wi-Fi, comprenant :
l'obtention (S210), par un premier point d'accès, AP, de la qualité de communication d'une pluralité de dispositifs connectés au premier AP ;
le regroupement (S220), par le premier AP, de la pluralité de dispositifs en au moins deux groupes de dispositifs sur la base de la qualité de communication de la pluralité de dispositifs, dans lequel la qualité de communication des dispositifs d'un premier groupe de dispositifs dans les au moins deux groupes de dispositifs est meilleure que la qualité de communication des dispositifs d'un second groupe de dispositifs ; et
l'envoi (S230, S810), par le premier AP, de données aux dispositifs du premier groupe de dispositifs et aux dispositifs du second groupe de dispositifs à un premier taux, dans lequel le premier taux est un taux de transmission, dans lequel le premier taux est déterminé sur la base d'un seuil du premier groupe de dispositifs et d'un seuil du second groupe de dispositifs, dans lequel
le seuil du premier groupe de dispositifs est différent du seuil du second groupe de dispositifs, le seuil du premier groupe de dispositifs est déterminé sur la base de la qualité de communication des dispositifs du premier groupe de dispositifs, le seuil du second groupe de dispositifs est déterminé sur la base de la qualité de communication des dispositifs du second groupe de dispositifs, et les données sont envoyées en mode multidiffusion ;
dans lequel le procédé comprend en outre :
l'encodage, par le premier AP, des données à envoyer selon un mode d'encodage prédéfini, afin d'obtenir au moins un bloc de code ; et
l'envoi, par le premier AP, d'un bloc de code redondant dans l'au moins un bloc de code aux dispositifs du premier groupe de dispositifs et aux dispositifs du second groupe de dispositifs à un second taux ; et
l'envoi, par le premier AP, de données aux dispositifs du premier groupe de dispositifs et aux dispositifs du second groupe de dispositifs à un premier taux comprend :
l'envoi, par le premier AP, d'un bloc de code de signal dans l'au moins un bloc de code aux dispositifs du premier groupe de dispositifs et aux dispositifs du second groupe de dispositifs au premier taux, dans lequel le second taux est différent du premier taux ;
dans lequel, après l'envoi (S810), par le premier AP, de données aux dispositifs du premier groupe de dispositifs et aux dispositifs du second groupe de dispositifs à un premier taux, le procédé comprend en outre :
l'obtention (S820), par le premier AP, de la qualité de communication mise à jour d'au moins un dispositif parmi la pluralité de dispositifs ; et
l'ajustement (S830), par le premier AP, du premier taux et/ou de la redondance des données à envoyer sur la base de la qualité de communication mise à jour de l'au moins un dispositif.

2. Procédé selon la revendication 1, dans lequel, lorsque la qualité de communication d'un dispositif du second groupe de dispositifs satisfait à une première condition prédéfinie, le procédé comprend en outre :
l'envoi, par le premier AP, d'informations de rejet au dispositif du second groupe de dispositifs, dans lequel les informations de rejet indiquent que l'accès est refusé.

3. Procédé selon la revendication 1 ou 2, dans lequel l'obtention, par un premier AP, de la qualité de communication d'une pluralité de dispositifs connectés au premier AP comprend :
l'obtention, par le premier AP, des distances respectives entre la pluralité de dispositifs et le premier AP, et la détermination de la qualité de communication des dispositifs sur la base des distances entre les dispositifs et le premier AP ; ou
l'obtention, par le premier AP, des taux de perte de paquets de la pluralité de dispositifs, et la détermination de la qualité de communication des dispositifs sur la base des taux de perte de paquets des dispositifs ; ou
l'obtention, par le premier AP, de la puissance du signal de la pluralité de dispositifs, et la détermination de la qualité de communication des dispositifs sur la base de la puissance du signal des dispositifs ; ou
l'obtention, par le premier AP, des rapports signal/bruit plus interférence de la pluralité de dispositifs, et la détermination de la qualité de communication des dispositifs sur la base des rapports signal/bruit plus interférence des dispositifs ; ou
l'obtention, par le premier AP, des délais de transmission de la pluralité de dispositifs, et la détermination de la qualité de communication des dispositifs sur la base des délais de transmission des dispositifs ; ou
l'obtention, par le premier AP, de la qualité d'affichage d'image de la pluralité de dispositifs, et la détermination de la qualité de communication des dispositifs sur la base de la qualité d'affichage d'image des dispositifs ; ou
l'obtention, par le premier AP, de la fluidité de lecture vidéo de la pluralité de dispositifs, et la détermination de la qualité de communication des dispositifs sur la base de la fluidité de lecture vidéo des dispositifs.

4. Procédé selon l'une quelconque des revendications 1 à 3, dans lequel le seuil du premier groupe de dispositifs est un premier seuil de taux de perte de paquets, et le seuil du second groupe de dispositifs est un second seuil de taux de perte de paquets ; ou
le seuil du premier groupe de dispositifs est un premier seuil de redondance de tous les dispositifs du premier groupe de dispositifs, premier seuil de redondance, et le seuil du second groupe de dispositifs est un second seuil de redondance de tous les dispositifs du second groupe de dispositifs, second seuil de redondance ; ou
le seuil du premier groupe de dispositifs est un premier seuil de délai de transmission, et le seuil du second groupe de dispositifs est un second seuil de délai de transmission.

5. Procédé selon la revendication 4, dans lequel lorsque le seuil du premier groupe de dispositifs est le premier seuil de taux de perte de paquets et que le seuil du second groupe de dispositifs est le second seuil de taux de perte de paquets, le premier taux satisfait à la condition suivante :
les taux de perte de paquets de tous les dispositifs du premier groupe de dispositifs sont inférieurs ou égaux au premier seuil de taux de perte de paquets, et les taux de perte de paquets de tous les dispositifs du second groupe de dispositifs sont inférieurs ou égaux au second seuil de taux de perte de paquets ; ou
lorsque le seuil du premier groupe de dispositifs est le premier seuil de redondance et que le seuil du second groupe de dispositifs est le second seuil de redondance, le premier taux satisfait à la condition suivante :
la redondance de tous les dispositifs du premier groupe de dispositifs est supérieure ou égale au premier seuil de redondance, et la redondance de tous les dispositifs du second groupe de dispositifs est supérieure ou égale au second seuil de redondance ; ou
lorsque le seuil du premier groupe de dispositifs est le premier seuil de délai de transmission et que le seuil du second groupe de dispositifs est le second seuil de délai de transmission, le premier taux satisfait à la condition suivante :
les délais de transmission de tous les dispositifs du premier groupe de dispositifs sont inférieurs ou égaux au premier seuil de délai de transmission, et les délais de transmission de tous les dispositifs du second groupe de dispositifs sont inférieurs ou égaux au second seuil de délai de transmission.

6. Procédé selon l'une quelconque des revendications 1 à 5, dans lequel le procédé comprend en outre :
la réception (S610), par le premier AP, des premières informations à partir d'une première station STA, dans lequel les premières informations comprennent des informations sur au moins un second AP correspondant respectivement à au moins une trame de balise reçue par la première station STA, et des informations d'indicateur de puissance du signal reçu, RSSI, de l'au moins une trame de balise ;
la détermination (S620), par le premier AP sur la base des premières informations, d'un second AP qui établit une connexion avec la première station STA, dans lequel le second AP est l'un de l'au moins un second AP ; et
l'envoi, par le premier AP, des premières informations d'indication à la première station STA, dans lequel les premières informations d'indication indiquent à la première station STA d'établir une connexion avec le second AP, dans lequel
la première station STA et le second AP sont deux de la pluralité de dispositifs.

7. Procédé selon la revendication 6, dans lequel la première station STA appartient au second groupe de dispositifs, et l'au moins un second AP appartient au premier groupe de dispositifs.

8. Procédé selon la revendication 1, dans lequel l'au moins un dispositif est un dispositif dont la qualité de communication satisfait à une seconde condition prédéfinie parmi la pluralité de dispositifs.

9. Procédé selon l'une quelconque des revendications 1 à 8, dans lequel le fait que le premier AP détermine que la pluralité de dispositifs peuvent être regroupés en au moins deux groupes de dispositifs, comprend :
la détermination, par le premier AP sur la base d'une règle préconfigurée, que la pluralité de dispositifs peuvent être regroupés en les au moins deux groupes de dispositifs ; ou
la réception, par le premier AP, d'informations d'autorisation à partir de chacun de la pluralité de dispositifs, dans lequel les informations d'autorisation indiquent que le regroupement en les au moins deux groupes de dispositifs est pris en charge.

10. Puce, dans laquelle la puce est installée sur un appareil de communication, la puce comprend un processeur et une interface de communication, dans laquelle la puce est configurée pour mettre en œuvre les opérations réalisées par le premier point d'accès, AP, dans le procédé selon l'une quelconque des revendications 1 à 9.
